# EUROPEAN PATENT APPLICATION

(11) **EP 4 671 912 A1**
(43) Date of publication of application: **31.12.2025**
(21) Application number: 24845733.5
(22) Date of filing: 26.04.2024
(51) Int. Cl.: G06F 1/16

(54) **ELECTRONIC DEVICE COMPRISING RAIL UNIT**

(30) Priority: 21.07.2023 KR 20230095258; 03.08.2023 KR 20230101584
(71) Applicant: Samsung Electronics Co., Ltd., Suwon-si, Gyeonggi-do 16677 (KR)
(72) Inventor: LEE, Ohhee, Suwon-si, Gyeonggi-do 16677 (KR); KIM, Sanghyeon, Suwon-si, Gyeonggi-do 16677 (KR); KIM, Hyelim, Suwon-si, Gyeonggi-do 16677 (KR); PARK, Jaehyeon, Suwon-si, Gyeonggi-do 16677 (KR); LIM, Sunhwa, Suwon-si, Gyeonggi-do 16677 (KR); CHOI, Kwanmo, Suwon-si, Gyeonggi-do 16677 (KR); CHOI, Jongchul, Suwon-si, Gyeonggi-do 16677 (KR)
(74) Representative: Appleyard Lees IP LLP
(86) International application number: PCT/KR2024/005708
(87) International publication number: WO 2025/023429

(57) **Abstract**

This electronic device may comprise: a first housing; a second housing which can move relative to the first housing in a first direction or a second direction opposite to the first direction; a driving unit which includes a first gear and a motor for rotating the first gear and is provided in the first housing; and a rail unit which includes a second gear and moves the second housing while the second gear is engaged with the first gear and moved by rotation of the first gear. The rail unit may comprise: a base which is coupled to the second housing and to which the second gear is connected slidably in the first direction or the second direction; a fastening member which connects one end of the base to the second housing; and a buffer member which is provided between the second gear and the fastening member to buffer an impact applied to the second gear. Various other embodiments may also be possible.

## Description

### TECHNICAL FIELD

The embodiments of the present disclosure relate to an electronic device including a rail unit.

### BACKGROUND ART

With the development of display-related technologies, electronic devices with flexible displays have been developed. A flexible display may be used in the form of a flat surface, and may also be deformed to be used in a specific shape. For example, an electronic device including a flexible display may be implemented as a slidable type to control a range of a display visually exposed to the outside relative to at least one slide axis.

However, the foregoing description should not be construed as having been acknowledged by the applicant as a prior art to the description set forth in the disclosure but should be construed only as a related art to the invention described herein.

### DISCLOSURE OF THE INVENTION

### TECHNICAL SOLUTIONS

An electronic device according to an example embodiment may include: a first housing, a second housing movable relative to the first housing in a first direction or a second direction opposite to the second direction, a driving unit provided in the first housing and including a first gear and a motor configured to rotate the first gear, and a rail unit including a second gear and configured to move the second housing as the second gear engages and moves by rotation of the first gear. The rail unit may include a base coupled to the second housing and slidably connected to the second gear in the first direction or the second direction, a fastening member configured to connect an end portion of the base to the second housing, and a buffer member provided between the second gear and the fastening member and configured to mitigate an impact applied to the second gear.

In addition, an electronic device according to an example embodiment of the present disclosure may include: a first housing, a second housing movable relative to the first housing in a first direction or a second direction opposite to the second direction, a driving unit provided in the first housing and including a first gear and a motor configured to rotate the first gear, and a rail unit including a second gear and configured to move the second housing as the second gear engages and moves by rotation of the first gear. In an embodiment, , wherein the rail unit may include a base to which the second gear is connected and having an end portion connected to a surface of the second housing facing the first housing and the other end portion extending toward the first housing, a fastening member configured to connect the base to the second housing, and a buffer member provided between the second gear and the fastening member and configured to mitigate an impact applied to the second gear.

### BRIEF DESCRIPTION OF DRAWINGS

FIG. 1 is a block diagram illustrating an example electronic device in a network environment according to various embodiments.
FIG. 2A is a front perspective view of a first state of an example electronic device according to various embodiments.
FIG. 2B is a front perspective view of a second state of the example electronic device according to various embodiments.
FIG. 2C is a rear perspective view of the first state of the example electronic device according to various embodiments.

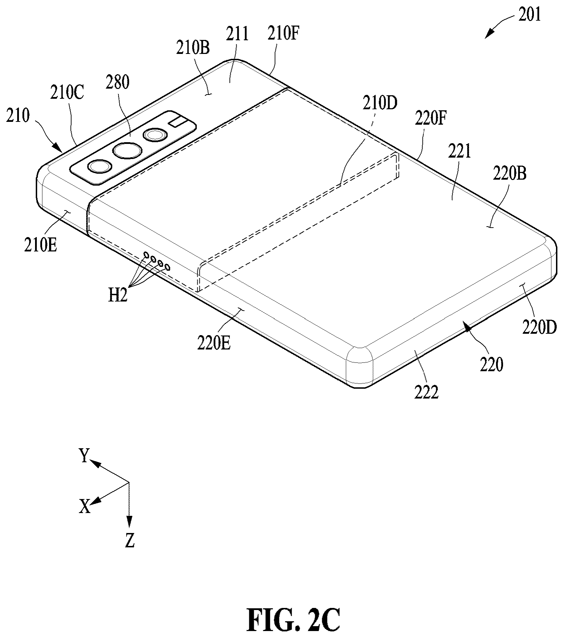

FIG. 2C is a rear perspective view of the second state of the example electronic device according to various embodiments.

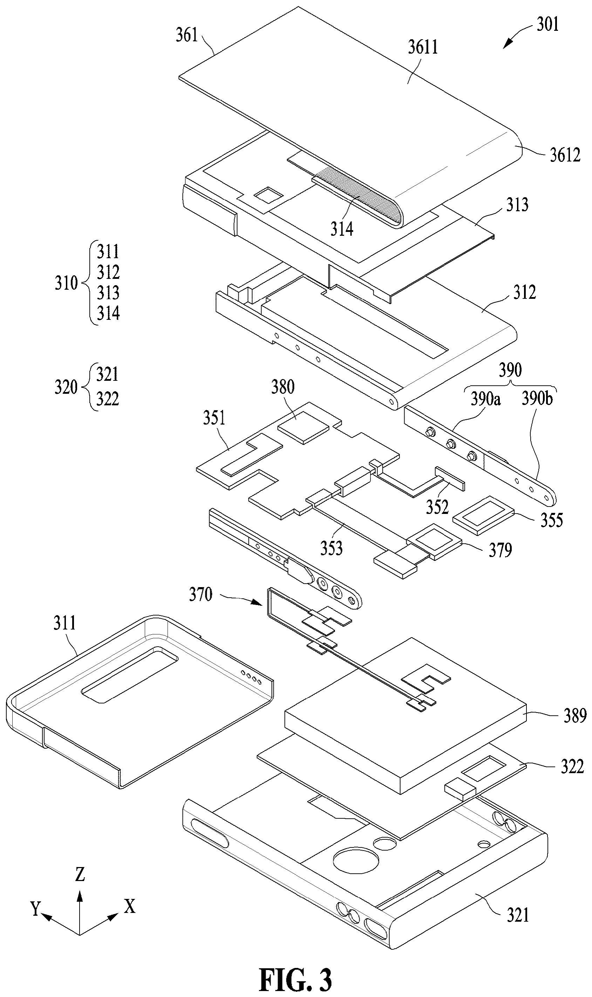

FIG. 3 is an exploded perspective view of an example electronic device according to various embodiments.

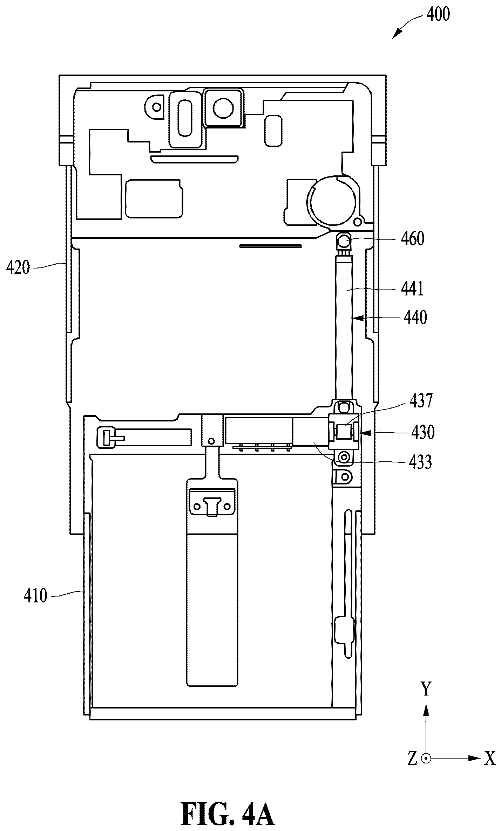

FIG. 4A is a diagram illustrating a plan view of an example electronic device according to an embodiment.

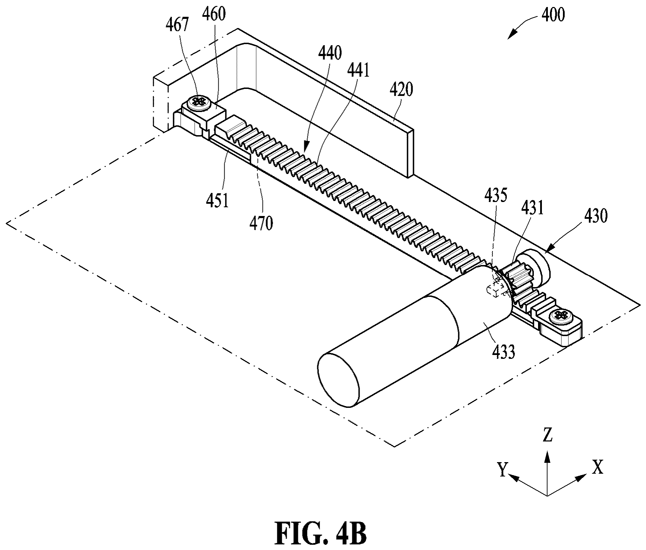

FIG. 4B is a perspective view of an electronic device according to an embodiment.

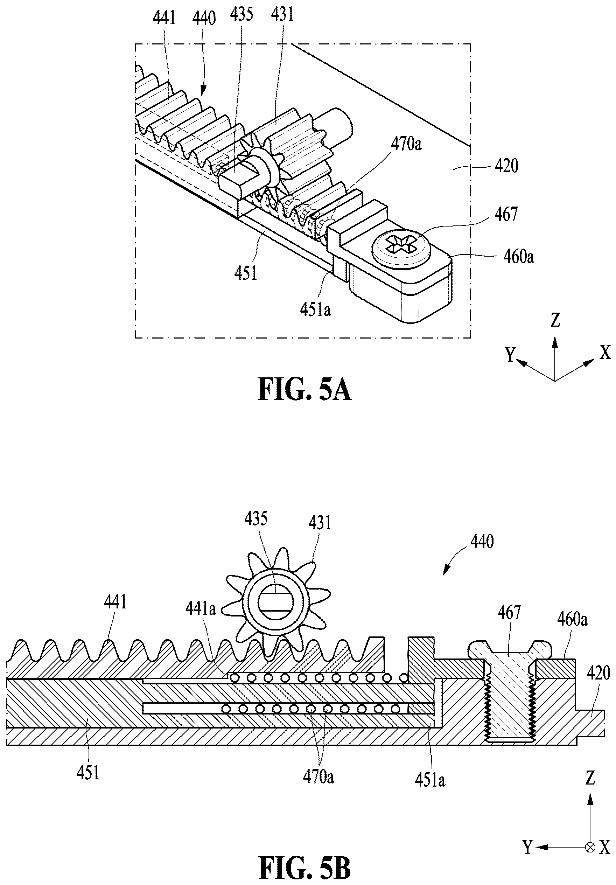

FIG. 5A is a perspective view of a partial area of a rail unit according to an embodiment.
FIG. 5B is a cross-sectional view of a partial area of a rail unit according to an embodiment.

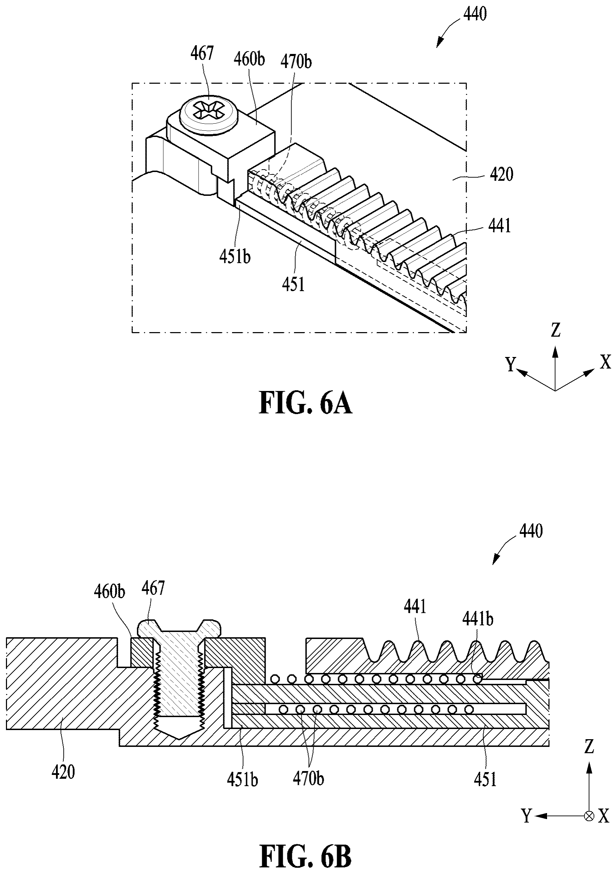

FIG. 6A is a perspective view of a partial area of a rail unit according to an embodiment.
FIG. 6B is a cross-sectional view of a partial area of a rail unit according to an embodiment.

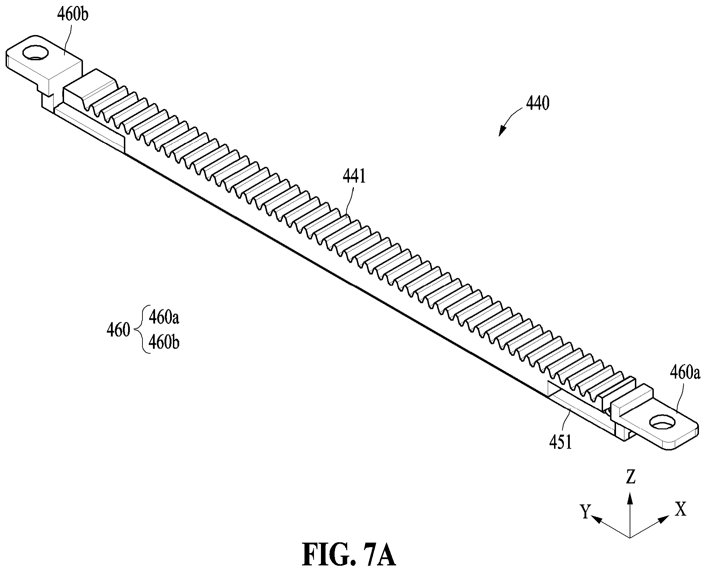

FIG. 7A is a perspective view of a rail unit according to an embodiment.

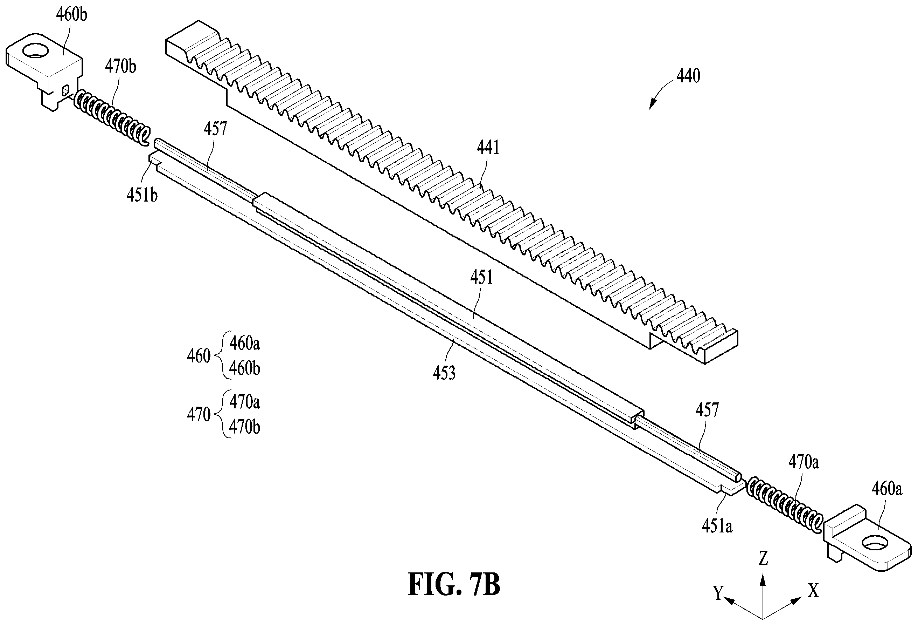

FIG. 7B is an exploded perspective view of a rail unit according to an embodiment.

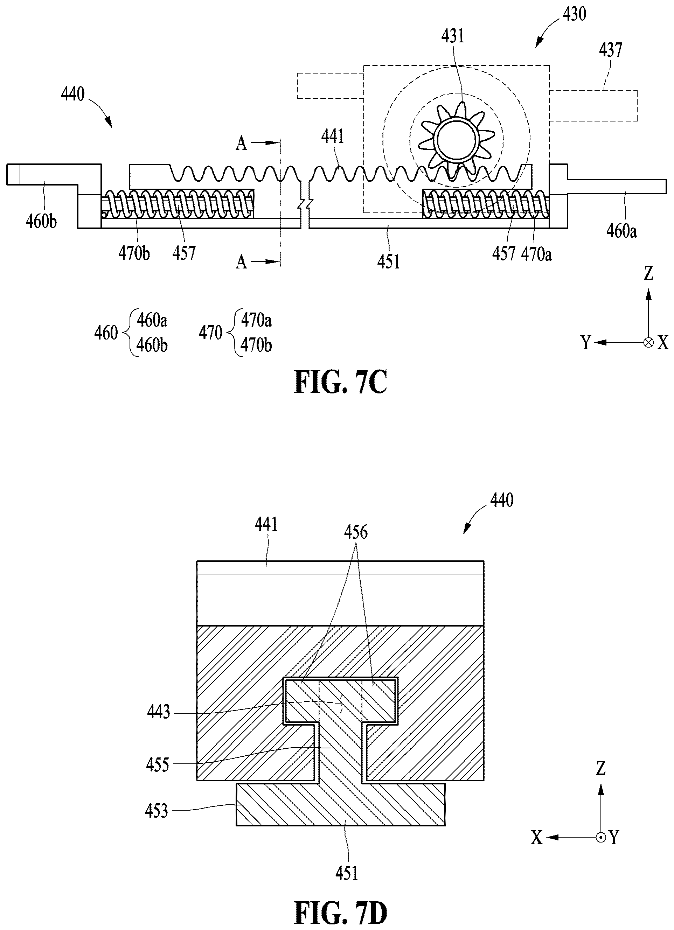

FIG. 7C is a side view of a rail unit and a driving unit according to an embodiment.
FIG. 7D is a cross-sectional view of a rail unit according to an embodiment.

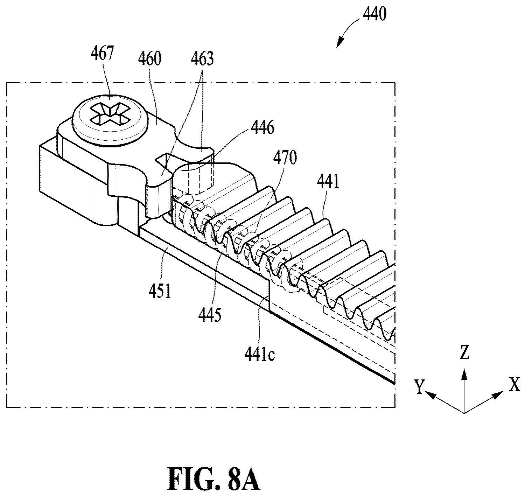

FIG. 8A is a perspective view of a partial area of a rail unit according to an embodiment.

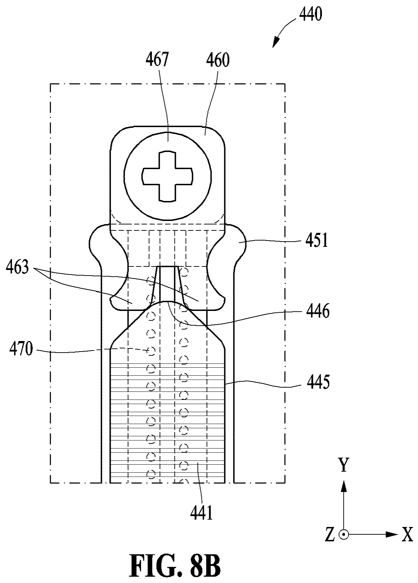

FIG. 8B is a cross-sectional view of a partial area of a rail unit according to an embodiment.

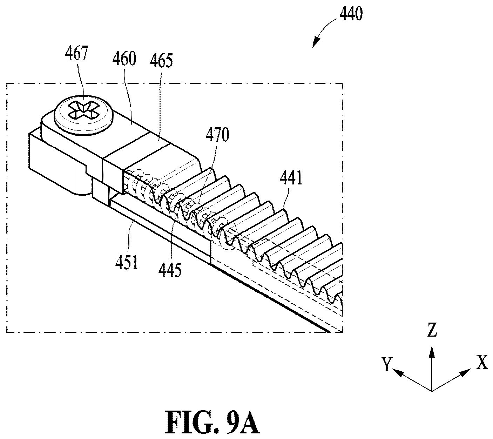

FIG. 9A is a perspective view of a partial area of a rail unit according to an embodiment.

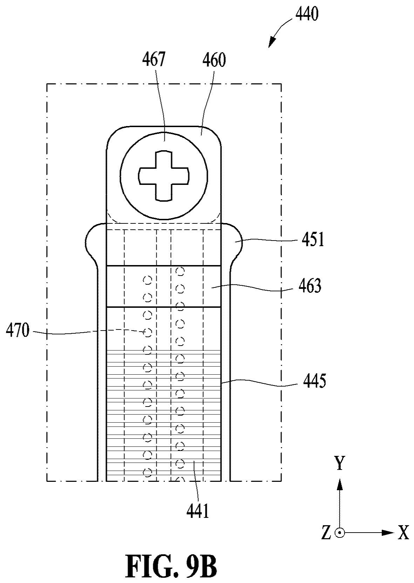

FIG. 9B is a cross-sectional view of a partial area of a rail unit according to an embodiment.

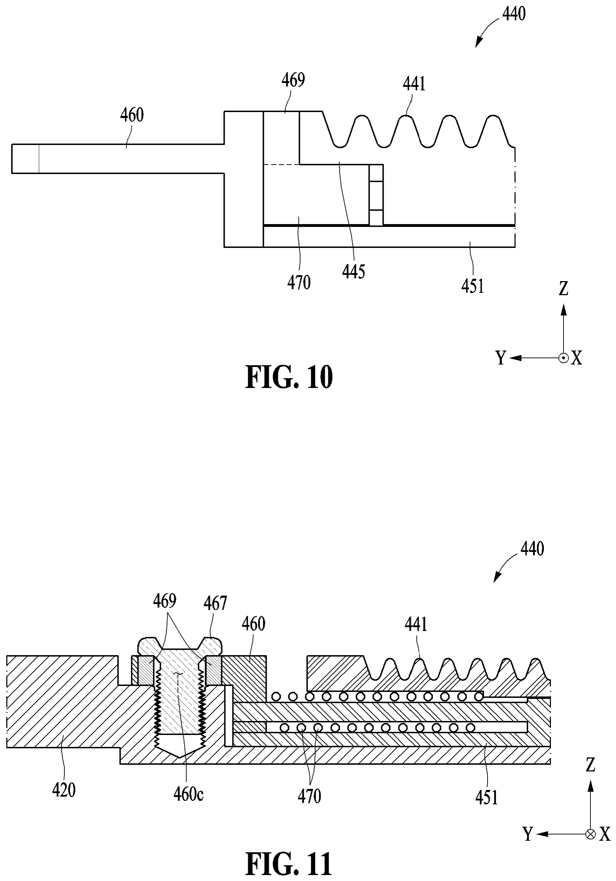

FIG. 10 is a perspective view of a partial area of a rail unit according to an embodiment.
FIG. 11 is a cross-sectional view of a partial area of a rail unit according to an embodiment.

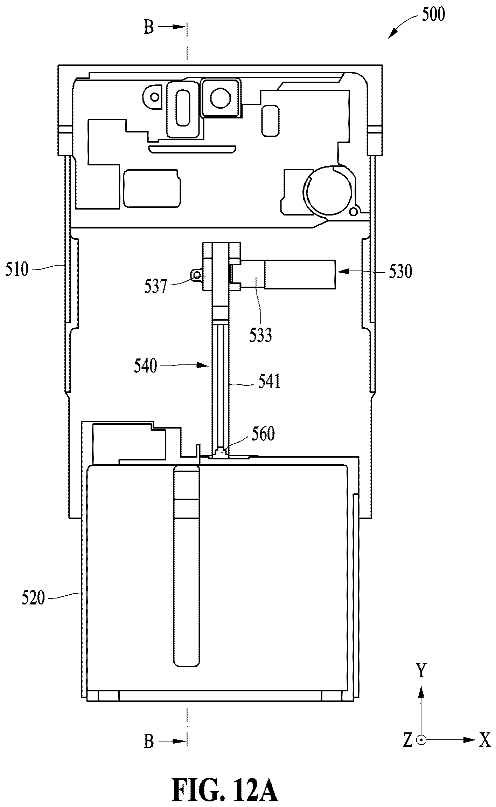

FIG. 12A is a plan view of an electronic device according to an embodiment.

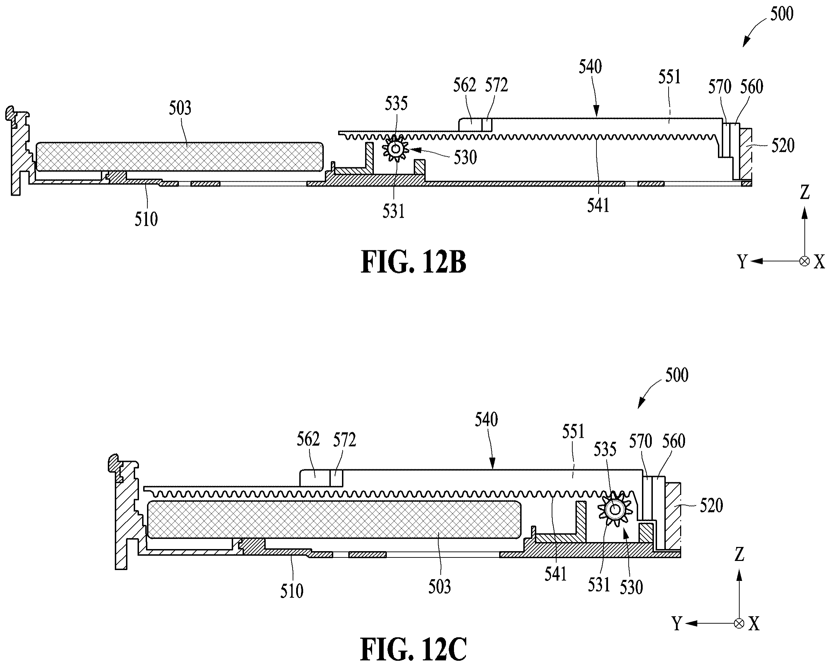

FIG. 12B is a cross-sectional view of an electronic device according to an embodiment.
FIG. 12C is a cross-sectional view of an electronic device according to an embodiment.

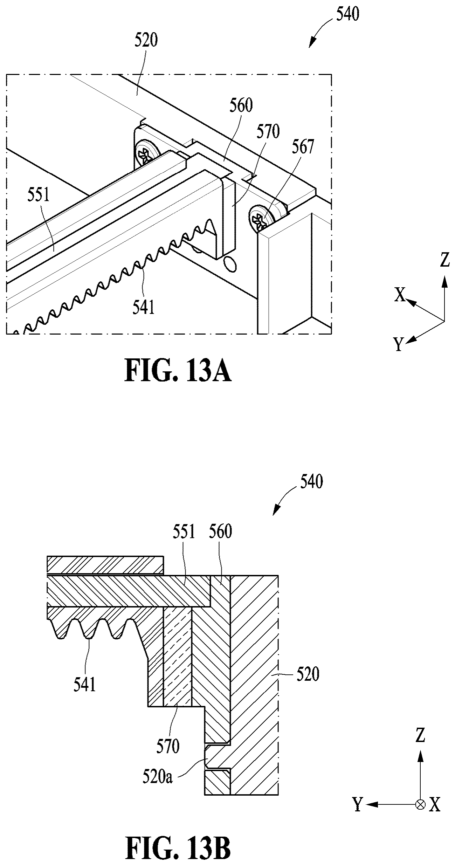

FIG. 13A is a perspective view of a partial area of a rail unit according to an embodiment.
FIG. 13B is a cross-sectional view of a partial area of a rail unit according to an embodiment.

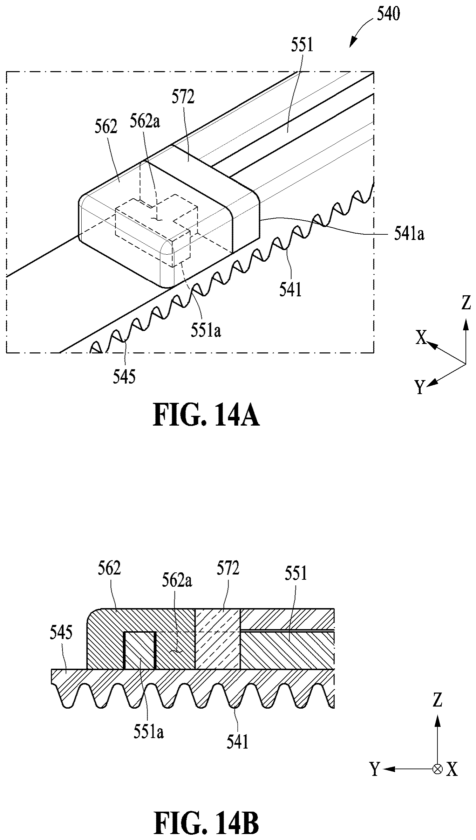

FIG. 14A is a perspective view of a partial area of a rail unit according to an embodiment.
FIG. 14B is a cross-sectional view of a partial area of a rail unit according to an embodiment.

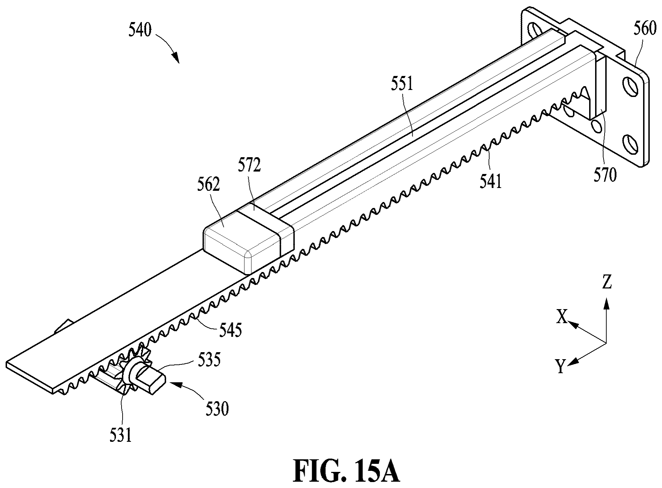

FIG. 15A is a perspective view of a rail unit according to an embodiment.

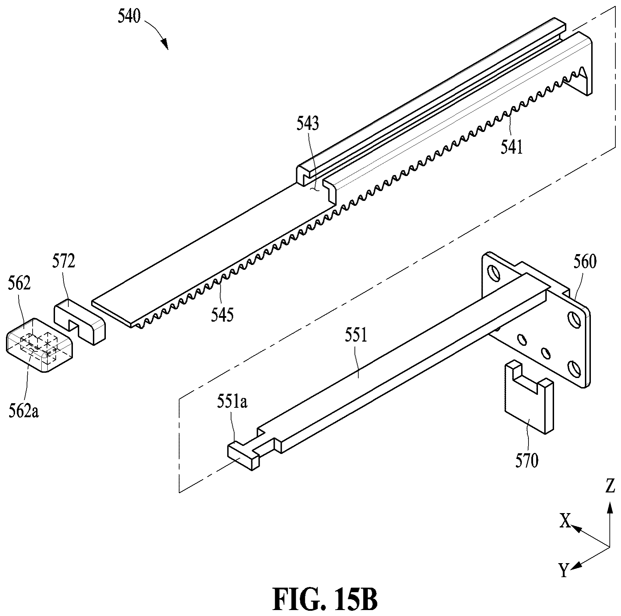

FIG. 15B is an exploded perspective view of a rail unit according to an embodiment.

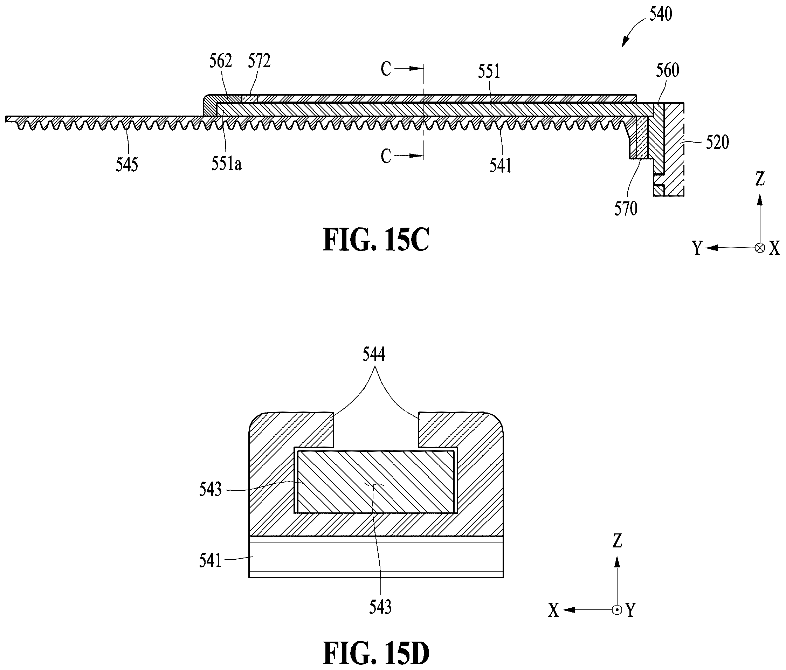

FIG. 15C is a cross-sectional view of a rail unit according to an embodiment.
FIG. 15D is a cross-sectional view of a rail unit according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

The electronic device according to the embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the item, unless the relevant context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. Terms such as "first," "second," "first," or "second" may be used simply to distinguish one component from another and may not limit the components with respect to other aspects (e.g., importance or order). It is to be understood that if a component (e.g., a first component) is referred to, with or without the term "operatively" or "communicatively", as "coupled with," "coupled to," "connected with," or "connected to" another component (e.g., a second component), it means that the component may be coupled with the other component directly (e.g., by wire), wirelessly, or via a third component.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

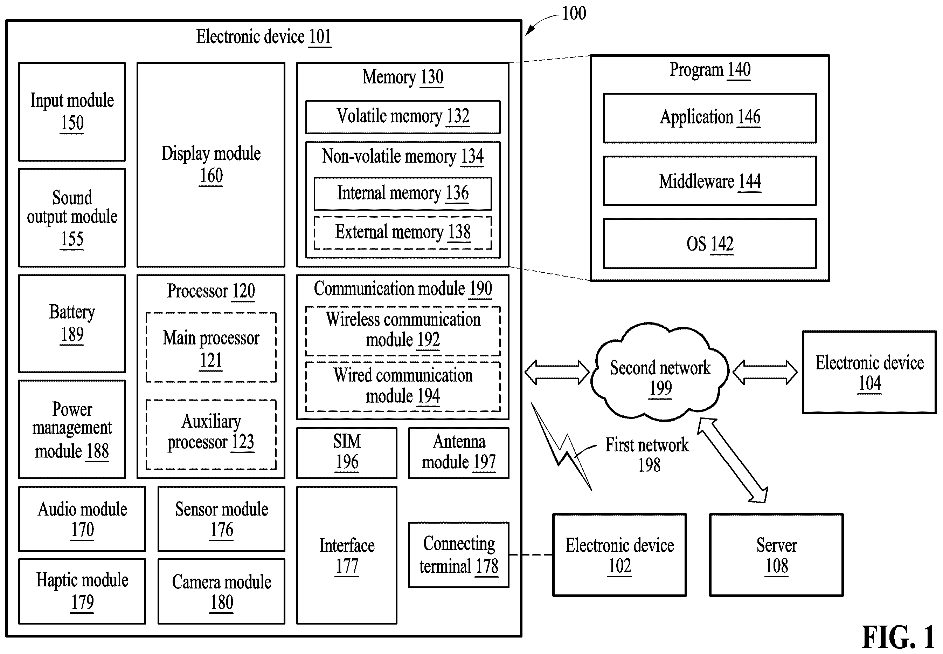

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120 and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as a part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., an electronic device 102) (e.g., a speaker or headphone) directly (wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., the bottom surface) of the PCB or adjacent to the first surface and capable of supporting a designated a high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed by one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

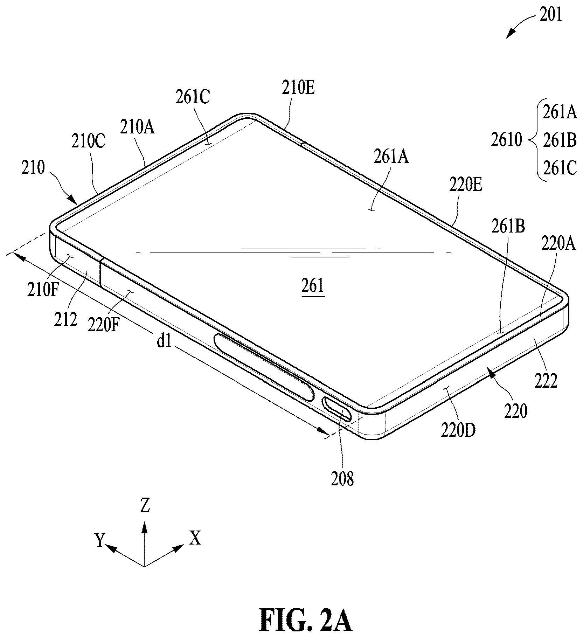

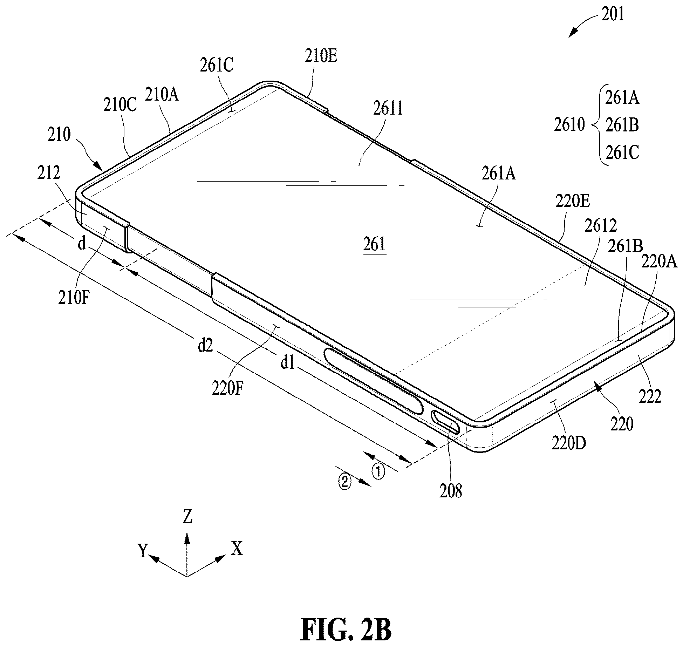

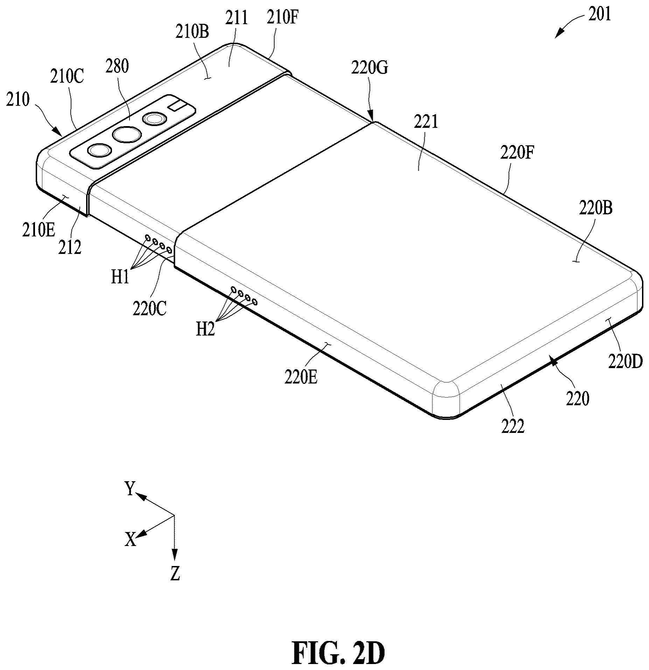

FIGS. 2A and 2B are front perspective views respectively illustrating a first state and a second state of an electronic device according to various embodiments, and FIGS. 2C and 2D are rear perspective views respectively illustrating the first and second states of the electronic device according to various embodiments.

Referring to FIGS. 2A to 2D, an electronic device 201 according to various embodiments may include housings 210 and 220 forming the exterior and accommodating components therein.

In an embodiment, the housings 210 and 220 may include a first housing 210 and a second housing 220 that are movably coupled to each other. In an embodiment, the first housing 210 may be slidably connected to the second housing 220. For example, the first housing 210 may be connected to the second housing 220 to move in a first moving direction (a ① direction) (e.g., the +Y direction) relative to the second housing 220 or in a second moving direction (a ② direction) (e.g., the -Y direction) that is opposite to the first moving direction (the ① direction). Hereinafter, the embodiments described in the present disclosure describe that the first housing 210 moves relative to the second housing 220. However, since the disclosure describes a relative moving operation between the first housing 210 and the second housing 220, the description may be also understood that the second housing 220 moves relative to the first housing 210.

In an embodiment, as the first housing 210 moves relative to the second housing 220, a state of the electronic device 201 may change between the first state and the second state. In an embodiment, the electronic device 201 may have a reduced shape in the first state and may have an expanded shape in the second state. The electronic device 201 may be used in the first state or the second state and may be used in an intermediate state between the first state and the second state.

In an embodiment, the first housing 210 may include a first surface 210A (e.g., a first front surface), a second surface 210B (e.g., a first rear surface) opposite to the first surface 210A, a first side surface 210C facing a first lateral direction (e.g., the +Y direction) and disposed between the first surface 210A and the second surface 210B, a second side surface 210D facing a second lateral direction (e.g., the -Y direction) opposite to the first lateral direction and disposed between the first surface 210A and the second surface 210B, a third side surface 210E facing a third lateral direction (e.g., the +X direction) intersecting with the first lateral direction and disposed between the first surface 210A and the second surface 210B, and a fourth side surface 210F facing a fourth lateral direction (e.g., the -X direction) opposite to the third lateral direction and disposed between the first surface 210A and the second surface 210B. In an embodiment, the first housing 210 may include a first plate 211 and a first side frame 212 that substantially extends in a thickness direction (e.g., the Z-axis direction) along an edge of the first plate 211. In an embodiment, the first plate 211 may form the second surface 210B, and the first side frame 212 may form the first side surface 210C, the second side surface 210D, the third side surface 210E, and the fourth side surface 210F. In an embodiment, the first plate 211 and the first side frame 212 may be integrally formed as one or may be separately formed and coupled to each other.

In an embodiment, the second housing 220 may include a third surface 220A (e.g., a second front surface), a fourth surface 220B (e.g., a second rear surface) opposite to the third surface 220A, a fifth side surface 220C facing the first lateral direction (e.g., the +Y direction) and disposed between the third surface 220A and the fourth surface 220B, a sixth side surface 220D facing the second lateral direction (e.g., the -Y direction) opposite to the first lateral direction and disposed between the third surface 220A and the fourth surface 220B, a seventh side surface 220E facing the third lateral direction (e.g., the +X direction) intersecting with the first lateral direction and disposed between the third surface 220A and the fourth surface 220B, and an eighth side surface 220F facing the fourth lateral direction (e.g., the -X direction) opposite to the third lateral direction and disposed between the third surface 220A and the fourth surface 220B. In an embodiment, the second housing 220 may include a second plate 221 and a second side frame 222 that substantially extends in a thickness direction (e.g., the Z-axis direction) along an edge of the second plate 221. In an embodiment, the second plate 221 may form the fourth surface 220B, and the second side frame 222 may form the fifth side surface 220C, the sixth side surface 220D, the seventh side surface 220E, and the eighth side surface 220F. In an embodiment, the second plate 221 and the second side frame 222 may be integrally formed as one or may be separately formed and coupled to each other.

In an embodiment, the first housing 210 and the second housing 220 may form the front surface (e.g., the surface in the +Z direction) of the electronic device 201 through the first surface 210A and the third surface 220A and may form the rear surface (e.g., the surface in the -Z direction) of the electronic device 201 through the second surface 210B and the fourth surface 220B. In an embodiment, the second housing 220 may include an open portion 220G in which at least a portion of the fifth surface 220C is open to partially and movably insert the first housing 210 therein. However, this is an example, and in an embodiment, the first housing 210 may include an open portion in which at least a portion of the second side surface 210D is open, and the second housing 220 may be partially and movably inserted into the first housing via the open portion formed on the second side surface 210D.

In an embodiment, the electronic device 201 may include a display panel 261 for displaying visual information. In an embodiment, the display panel 261 may be visible to the outside of the electronic device 201 through a display area 2610. In an embodiment, the display area 2610 may include a first area 261A provided parallel to the first surface 210A and the third surface 220A, a second area 261B connected to an end of the first area 261A, and a third area 261C connected to the other end of the first area 261A. The second area 261B and the third area 261C may be provided on opposite sides based on the first area 261A. In an embodiment, the second area 261B and the third area 261C may each form a flexibly curved surface. In an embodiment, the display panel 261 may display a screen via the display area 2610. The display panel 261 may display a single integrated screen via the entire display area 2610 or may display a screen via only a portion of the display 2610. In an embodiment, the display panel 261 may display a plurality of screens that is partially divided via the display area 2610. For example, the display panel 261 may display a screen via the first area 261A and may display a different screen from the first area 261A via the second area 261B and/or the third area 261C.

In an embodiment, the display panel 261 may include a flat portion 2611 forming at least a portion of the display area 2610, and a rolling portion 2612 (or a bending portion) extending from the flat portion 2611. The rolling portion 2612 may be withdrawn from the inside to the outside of the electronic device 201 or may be inserted into the electronic device 201 from the outside, according to the movement of the first housing 210 relative to the second housing 220. The rolling portion 2612 withdrawn to the outside of the electronic device 201 may be exposed to the outside of the electronic device 201 and may form the display area 2610 together with the flat portion 2611. The size of the display area 2610 may vary depending on the degree of withdrawal of the rolling portion 2612.

In an embodiment, the size of the display area 2610 (e.g., the first area 261A, the second area 261B, and the third area 261C) of the display panel 261 may change as the state of the electronic device 201 changes. In an embodiment, the display area 2610 of the display panel 261 may form a first size (e.g., a minimum size) that is minimized in the first state (e.g., the reduced state, the shape of FIG. 2A) of the electronic device 201 and may form a second size (e.g., a maximum size) that is maximized in the second state (e.g., the expanded state, the shape of FIG. 2C) of the electronic device 201. When the electronic device 201 is in between the first state and the second state, the size of the display area 2610 of the display panel 261 may be expanded or reduced in response to the state of the electronic device 201. For example, while changing from the first state to the second state, when the first housing 210 moves in the first moving direction (the ① direction) by a predetermined length d relative to the second housing 220, the length of the display area 2610 parallel to the first moving direction (the ① direction) may change to a second length d2, which is increased from a first length d1 by the predetermined length d, thereby expanding the display area 2610. Similarly, while changing from the second state to the first state, when the first housing 210 moves in the second moving direction (the ② direction) by the predetermined length d relative to the second housing 220, the length of the display area 2610 parallel to the second moving direction (the ② direction) may change to the first length d1, which is decreased from the second length d2 by the predetermined length d, thereby reducing the display area 2610. In addition, while the state of the electronic device 201 changes between the first state and the second state, the sizes of the second area 261B and the third area 261C may be substantially constant.

In an embodiment, the electronic device 201 may include at least one of an input module (e.g., the input module 150 of FIG. 1), a sound output module (e.g., the sound output module 155 of FIG. 1), a camera module 280 (e.g., the camera module 180 of FIG. 1), and a connector port 208.

In an embodiment, the input module may receive an input signal according to manipulation of a user. For example, the input module may be disposed on the seventh side surface 220E or the eighth side surface 220F of the second housing 220. The position of the input module is not limited thereto. For example, the input module may be disposed in the first housing 210.

In an embodiment, at least one of the first housing 210 and the second housing 220 may include a hole for radiating sound generated by the sound output module to the outside. For example, the first housing 210 may include a first hole H1 covered by the second housing 220 when the electronic device is in the first state and exposed to the outside when the electronic device is in the second state. For example, the second housing 220 may include a second hole H2 formed in at least one of the sixth side surface 220D, the seventh side surface 220E, and the eighth side surface 220F. For example, the first hole H1 and the second hole H2 may be disposed to be substantially aligned with each other when the electronic device is in the first state.

FIG. 3 is an exploded perspective view of an electronic device according to an embodiment.

Referring to FIG. 3, an electronic device 301 (e.g., the electronic device 101 of FIG. 1 and the electronic device 201 of FIGS. 2A to 2D) according to an embodiment may include a first housing 310 (e.g., the first housing 210 of FIG. 2B), a second housing 320 (e.g., the second housing 220 of FIG. 2B), and a display panel 361 (e.g., the display panel 261 of FIG. 2B).

In an embodiment, the electronic device 301 may include a guide rail 390 for moving the first housing 310 and the second housing 320 relative to each other. In an embodiment, the guide rail 390 may be disposed in the first housing 310 or the second housing 320. The guide rail 390 may guide a direction and/or range for moving the first housing 310 relative to the second housing 320. An electric motor, a hydraulic motor, or any motor (not shown) suitable for generating power may be connected to the guide rail 390.

In an embodiment, the guide rail 390 may be connected to the first housing 310 and the second housing 320. In an embodiment, at least a portion of the guide rail 390 may be fixed to the second housing 320. In an embodiment, the other portion of the guide rail 390 may be connected to the first housing 310 to enable the first housing 310 to move relative to the second housing 320. In an embodiment, the guide rail 390 may be connected to a support structure 314 described below. While the first housing 310 moves relative to the second housing 320, the first housing 310 may move via the guide rail 390, and while the first housing 310 moves via the guide rail 390, the support structure 314 connected to the guide rail 390 may also move. A detailed operation is described below.

In an embodiment, the guide rail 390 may include a first guide portion 390a and a second guide portion 390b. In an embodiment, the second guide portion 390b may be fixedly connected to the second housing 320. In an embodiment, the first guide portion 390a may be movably connected to the second guide portion 390b. In an embodiment, the first housing 310 may be connected to the first guide portion 390a. In an embodiment, the first housing 310 connected to the first guide portion 390a may move relative to the second housing 320 as the first guide portion 390a moves relative to the second guide portion 390b.

In an embodiment, the electronic device 301 may include a sound output module 355 (e.g., the sound output module 155 of FIG. 1). In an embodiment, the sound output module 355 may be disposed in the first housing 310 or the second housing 320.

In an embodiment, the electronic device 301 may include a haptic module 379 (e.g., the haptic module 179 of FIG. 1). The haptic module 379 may include, for example, a vibrator configured to generate vibrations. The haptic module 379 may be disposed in the second housing 320. In an embodiment, the haptic module 379 may be disposed adjacent to the sound output module 355. In an embodiment, the haptic module 379 may disposed in the first housing 310.

In an embodiment, the electronic device 301 may include a camera module 380 (e.g., the camera module 180 of FIG. 1). The camera module 380 may include one or more cameras to obtain an image in one direction (e.g., the +Z direction) or the other direction (e.g., the -Z direction) of the electronic device 301.

In an embodiment, the electronic device 301 may include a battery 389 (e.g., the battery 189 of FIG. 1). In an embodiment, the battery 389 may be disposed in the second housing 320. In an embodiment, the battery 389 may be disposed in the first housing 310.

The electronic device 301 may include the first PCB 351, a second PCB 352, and the third PCB 353. The first PCB 351, the second PCB 352, and the third PCB 353 may include a plurality of metal layers and a plurality of dielectrics each positioned between a pair of adjacent metal layers. In an embodiment, the first PCB 351 may be disposed in the first housing 310. The first PCB 351 may include a first electronic component (e.g., the power management module 188 of FIG. 1). The second PCB 352 may be disposed in the first housing 310. For example, the second PCB 352 may be electrically connected to the guide rail 390. The third PCB 353 may be disposed in the second housing 320. For example, the third PCB 353 may be electrically connected to the haptic module 379.

In an embodiment, the first housing 310 may include a first cover 311, a first plate 312, and a second plate 313. The second housing 320 may include a second cover 321 and a third plate 322. The first cover 311 may at least partially surround the sound output module 355, the camera module 380, and the haptic module 379. The first plate 312 may at least partially accommodate electronic components (e.g., the guide rail 390, the sound output module 355, the camera module 380, the first PCB 351, the second PCB 352, the third PCB 353, the haptic module 379, and other electronic components). The second plate 313 may be disposed between the first plate 312 and the display panel 361 and may support the guide rail 390 and the display panel 361.

In an embodiment, the support structure 314 may prevent or reduce damage to the display panel 361 by supporting the display panel 361 while the display panel 361 is flexibly bent. In an embodiment, the support structure 314 may include a plurality of lattice plates filling the internal space of the display panel 361 that is flexible. The plurality of lattice plates is described below.

In an embodiment, the electronic device 301 may include a connecting member 370 for connecting the first housing 310 to the support structure 314. In an embodiment, an end portion of the connecting member 370 may be connected to the first housing 310, and the other end portion may be connected to the support structure 314. In an embodiment, the connecting member 370 may connect the first housing 310 to the support structure 314 in a height direction (e.g., the Z-axis direction of FIG. 3) of the housing.

In an embodiment, since the total length of the connecting member 370 is the same, when the first housing 310 moves in a direction (e.g., the +Y-axis direction of FIG. 3) away from the second housing, the support structure 314 may move in a direction (e.g., the -Y-axis direction of FIG. 3) opposite to the moving direction of the first housing, and the display area (e.g., the display area 2610 of FIG. 2A) of the display panel 361 supported by the support structure 314 may expand. When the first housing 310 moves in a direction (e.g., the -Y-axis direction of FIG. 3) approaching the second housing 320, the support structure 314 may move in a direction (e.g., the +Y-axis direction of FIG. 3) opposite to the moving direction of the first housing 310, and the display area of the display panel 361 may be reduced.

In an embodiment, the second cover 321 may be coupled to the first cover 311 to at least partially surround the first cover 311 and allow the first cover 311 to slide relative to the second cover 321. The second cover 321 may expose at least a portion (e.g., the camera module 380) of the electronic components to the outside of the electronic device 301. The third plate 322 may be disposed inside the second cover 321.

The structures of the first housing 310 and the second housing 320 described herein are not limited to the illustrated embodiments and may be various types of structures.

In an embodiment, the electronic device 301 may include at least one antenna (not shown). For example, the at least one antenna may wirelessly communicate with an external electronic device (e.g., the electronic device 104 of FIG. 1) or may wirelessly transmit and receive power required for charging. According to an embodiment, the antenna may include a legacy antenna, an mmWave antenna, a near field communication (NFC) antenna, a wireless charging antenna, and/or a magnetic secure transmission (MST) antenna. In an embodiment, the first housing 310 and the second housing 320 may include a conductive portion of which at least a portion is formed of metal to form an antenna structure that functions as a radiator.

FIG. 4A is a plan view of an electronic device 400 according to an embodiment, and FIG. 4B is a perspective view of the electronic device 400.

Referring to FIGS. 4A and 4B, the electronic device 400 (e.g., the electronic device 101 of FIG. 1, the electronic device 201 of FIGS. 2A to 2D, or the electronic device 301 of FIG.3) according to an embodiment may include at least some of a first housing 410 (e.g., the first housing 210 of FIGS. 2A to 2D or the first housing 310 of FIG. 3), a second housing 420 (e.g., the second housing 220 of FIGS. 2A to 2D or the second housing 320 of FIG. 3), a driving unit 430, and a rail unit 440.

Hereinafter, any repeated description may not be provided here, and in the rail unit 440 and the electronic device 400 including the same, it is apparent that a portion of components or structures may be replaced, added, or omitted within a scope that one of ordinary skill in the art may easily understand with reference to the following drawings and descriptions. In addition, at least one component or feature of the embodiments described above may be coupled to the rail unit 440 or the electronic device 400 including the same, unless technically and clearly infeasible.

In an embodiment, the electronic device 400 may include a flexible or foldable display (e.g., the display module 160 of FIG. 1, the display panel 261 of FIGS. 2A to 2D, or the display panel 361 of FIG. 3). The electronic device 400 may be a slidable device in which a screen display area of the display is adjustable via expandable or contractible housings 410 or 420.

Hereinafter, other components of the electronic device 400 may not be illustrated, and the electronic device 400 is described based on the housings 410 and 420, the driving unit 430, and the rail unit 440.

In an embodiment, the first housing 410 and the second housing 420 may move relative to each other in a first direction or a second direction that is opposite to the first direction. The electronic device 400 and/or the display may be expanded or contracted as at least one of the first housing 410 and the second housing 420 moves in a direction away from or approaching the other.

In an embodiment, the first direction may be a direction in which the first housing 410 and the second housing 420 are away from each other, and the second direction may be a direction in which the first housing 410 and the second housing 420 move close to each other.

For example, the second housing 420 may move relative to the first housing 410 in the first direction (or the "expansion direction") (e.g., the -Y direction) or the second direction (or the "contraction direction") (e.g., the +Y direction). Alternatively, the second housing 420 may move relative to the first housing 410 in the first or second direction.

Hereinafter, based on an embodiment of the electronic device 400 in which the driving unit 430 is disposed in the first housing 410 and the rail unit 440 is disposed in the second housing 420, operations of the electronic device 400 are described on the assumption that the second housing 420 moves relative to the first housing 410 in the first or second direction. In addition, in the descriptions of the rail unit 440 and the electronic device 400 including the same according to the embodiments of the present disclosure, the "first direction" may refer to the -Y direction or the expansion direction, and the "second direction" may refer to the +Y direction or the contraction direction.

However, this is for ease of description, and the actual implementation of the electronic device 400 is not limited thereto. For example, the following descriptions may apply identically or similarly to an embodiment of the electronic device 400 in which the driving unit 430 is disposed in the second housing, the rail unit 440 is disposed in the first housing 410, and the first housing 410 moves relative to the second housing 420.

In an embodiment, the driving unit 430 may provide power for relative movement of the first housing 410 or the second housing 420. The driving unit 430 may be disposed in the second housing 420. The driving unit 430 may include a first gear 431, a motor 433, a shaft 435, and a gear frame 437.

In an embodiment, the first gear 431 may be a pinion gear. The first gear 431 may have a gear structure that engages with a second gear 441. For example, the first gear 431 may have a shape in which gear teeth are arranged in a direction surrounding a rotation axis or the shaft 435.

In an embodiment, the first gear 431 may rotate around the rotation axis. As the first gear 431 rotates, the first gear 431 may engage with the second gear 441 and move in the first direction or the second direction. The first housing 410 connected to the first gear 431 may move relative to the second housing 420. Alternatively, the second housing 420 connected to the second gear 441 may move relative to the first housing 410.

In an embodiment, the motor 433 may rotate the first gear 431. The motor 433 may provide power to the driving unit 430. The motor 433 may be controlled by a processor (e.g., the processor 120 of FIG. 1) of the electronic device 400 or a processor or controller (e.g., the auxiliary processor 123 of FIG. 1) of the driving unit 430. The motor 433 may receive power from a battery (e.g., the battery 189 of FIG. 1).

In an embodiment, the shaft 435 may connect the motor 433 and the first gear 431 to each other. Alternatively, the shaft 435 may connect the gear frame 437 and the first gear 431 to each other. The shaft 435 may be horizontally aligned with the rotation axis of the motor 433. The motor 433 may rotate the first gear 431 fixed or connected to the shaft 435 by rotating the shaft 435.

In an embodiment, the gear frame 437 may be fixed to the first housing 410. The gear frame 437 may accommodate the first gear 431 therein. The gear frame 437 may protect the first gear 431 from moisture, dust, or a foreign material outside the gear frame 437.

In an embodiment, the rail unit 440 may form a rail on which the first gear 431 of the driving unit 430 rotates and/or moves. The rail unit 440 may include the second gear 441, a base 451, and a fastening member 460.

In an embodiment, the rail unit 440 may be disposed in the second housing 420. For example, the rail unit 440 may be disposed relatively more adjacent to an end portion on one side (e.g., the +X or -X direction), based on both side directions (e.g., the X-axis direction) perpendicular to the first direction in the second housing 420. Alternatively, as shown in FIG. 4B, the rail unit 440 may be disposed on one side surface of the inside of the second housing 420. As the rail unit 440 is disposed adjacent in one side direction, the internal space efficiency of the electronic device 400 may be improved.

In an embodiment, the second gear 441 may be a rack gear. The second gear 441 may have a gear structure that engages with the first gear 431. For example, the second gear 441 may have a structure extending in the first direction, and gear teeth of the second gear 441 may be arranged in the first direction.

In an embodiment, the base 451 may be coupled to the second housing 420. The base 451 may support other components of the rail unit 440. For example, the second gear 441 may be slidably connected to the base 451 in the first direction or the second direction with a predetermined gap.

In an embodiment, the second gear 441 may be connected to the base 451 while the second gear 441 is in a state in which the second gear 441 may move in the first or second direction but may not move in other directions (e.g., the X-axis or Z-axis direction).

However, the term "slide" may encompass not only visually observable movement by a predetermined interval, but also movement or vibration of the second gear 441 in a visually unobservable range as a component (e.g., a buffer member 470) disposed on one side of the second gear 441 is compressed or deformed.

In an embodiment, the fastening member 460 may connect an end portion of the base 451 and the second housing 420 to each other. The fastening member 460 may be structurally connected to the second housing 420 or may be fixed to the second housing 420 by an adhesive member (e.g., adhesive or double-sided tape). Alternatively, the fastening member 460 may include a connecting portion or an opening to which a fixing member 467 is fastened and may be fixed to the second housing 420 via the fixing member 467.

For example, as shown in the drawings, the fixing member 467 may be supported by the top surface of the fastening member 460 and may penetrate the fastening member 460. As the fixing member 467 is fixed to the second housing 420, the fastening member 460 may be fixed to the second housing 420 via the fixing member 467.

In an embodiment, the buffer member 470 may be provided between the second gear 441 and the fastening member 460. The buffer member 470 may be disposed to contact an end portion of the second gear 441. When the second gear 441 slides toward the buffer member 470 or an impact is delivered from the second gear 441 to the buffer member 470, the buffer member 470 may be compressed or deformed in response thereto. For example, as the buffer member 470 is deformed, the buffer member 470 may generate an elastic force to resist deformation, and the elastic force may restrict the slide motion of the second gear 441.

In an embodiment, the buffer member 470 may absorb an impact applied to the second gear 441 or mitigate the impact applied to the second gear 441. The buffer member 470 may be disposed on a path on which the second gear 441 moves to restrict or hinder the slide movement of the second gear 441.

For example, the buffer member 470 may be formed of rubber, silicone, or an elastic structure (e.g., a coil spring or a plate spring) having a spring structure or may be formed of polymer synthetic resin, such as polyurethane.

According to an embodiment, the electronic device 400 may improve the durability of the driving unit 430 and/or the rail unit 440 as the second gear 441 is slidably connected to the base 451 and the buffer member 470 mitigates the impact applied to the second gear 441.

For example, when the second housing 420 quickly or strongly slides, the first gear 431 may quickly or powerfully rotate while being engaged with the second gear 441, and the shaft 435 connected to the first gear 431 may twist, or stress may be generated in the shaft 435. The shaft 435 may be at risk of being deformed or damaged as the shaft 435 is bent due to torsion or stress.

In an embodiment of the present disclosure, since the second gear 441 is slidably connected to the base 451 in the first direction or the second direction, and the impact applied to the second gear 441 is mitigated by the buffer member 470, at least a portion of the impact applied to the first gear 431 and the shaft 435 may be absorbed by the buffer member 470 and the slide movement of the second gear 441.

FIG. 5A is a perspective view of a partial area of the rail unit 440 according to an embodiment, FIG. 5B is a cross-sectional view of a partial area of the rail unit 440 according to an embodiment, FIG. 6A is a perspective view of a partial area of the rail unit 440 according to an embodiment, and FIG. 6B is a cross-sectional view of a partial area of the rail unit 440 according to an embodiment.

Specifically, FIG. 5A is a perspective view of an end portion on a side (e.g., the -Y direction or the first direction) of the rail unit 440, and FIG. 5B is a side cross-sectional view of the end portion on the side of the rail unit 440 of FIG. 5A. In addition, FIG. 6A is a perspective view of an end portion on the other side (e.g., the +Y direction or the second direction) of the rail unit 440, and FIG. 6B is a side cross-sectional view of the end portion on the other side of the rail unit 440 of FIG. 6A.

Referring to FIGS. 5A, 5B, 6A, and 6B, the rail unit 440 according to an embodiment may include at least some of the base 451, the fastening member 460, and the buffer member 470.

Hereinafter, any repeated description may not be provided, and in the rail unit 440 and an electronic device (e.g., the electronic device 101 of FIG. 1, the electronic device 201 of FIGS. 2A to 2D, the electronic device 301 of FIG. 3, or the electronic device 400 of FIGS. 4A and 4B) including the same, it is apparent that a portion of components or structures may be replaced, added, or omitted within a scope that one of ordinary skill in the art may easily understand with reference to the following drawings and descriptions. In addition, at least one component or feature of the various embodiments described above may be coupled to the rail unit 440 or the electronic device 400 including the same, unless technically and clearly infeasible.

In an embodiment, a plurality of fastening members (e.g., the fastening member 460 of FIGS. 4A and 4B) may be provided. For example, the plurality of fastening members 460 may include a first fastening member 460a and a second fastening member 460b. The first fastening member 460a and the second fastening member 460b may be spaced apart from each other and may be respectively connected to both end portions of the base 451.

For example, the first fastening member 460a may be connected to an end portion 451a of the base 451 in the first direction and may be connected to the second housing 420. In addition, the second fastening member 460b may be connected to an end portion 451b of the base 451 in the second direction and may be connected to the second housing 420.

In an embodiment, the rail unit 440 may include a plurality of buffer members (e.g., the buffer member 470 of FIGS. 4A and 4B). For example, the plurality of buffer members 470 may include a first buffer member 470a and a second buffer member 470b. The first buffer member 470a and the second buffer member 470b may be spaced apart from each other and may be respectively disposed on both end portions of the second gear 441.

For example, the first buffer member 470a may be provided between an end portion 441a of the second gear 441 in the first direction and the first fastening member 460a. In addition, the second buffer member 470b may be provided between an end portion 441b of the second gear 441 in the second direction and the second fastening member 460b.

Hereinafter, the rail unit 440 including the first fastening member 460a and the first buffer member 470a shown in FIGS. 5A and 5B and the rail unit 440 including the second fastening member 460b and the second buffer member 470b shown in FIGS. 6A and 6B are described, but the descriptions of the rail unit 440 may be independent.

In other words, although not shown in the drawings, the rail unit 440 and the electronic device 400 including the same according to an embodiment of the present disclosure may include the fastening member 460 and the buffer member 470 only on one side of the rail unit 440.

For example, the rail unit 440 according to an embodiment may include the first fastening member 460a and the first buffer member 470a and may not include the second fastening member 460b and the second buffer member 470b.

Alternatively, for example, the rail unit 440 according to an embodiment may include the second fastening member 460b and the second buffer member 470b and may not include the first fastening member 460a and the first buffer member 470a.

Alternatively, the rail unit 440 according to an embodiment may include at least some or all of the first fastening member 460a, the first buffer member 470a, the second fastening member 460b, and the second buffer member 470b.

In an embodiment, as shown in FIGS. 5A and 5B, the first fastening member 460a may be connected to the end portion 451a of the base 451 in the first direction. The first buffer member 470a may be provided between the first fastening member 460a and the end portion 441a of the second gear 441 in the first direction. The first buffer member 470a may mitigate an impact that is generated as the second gear 441 quickly or strongly slides in the first direction.

For example, when the electronic device 400 falls or drops or a user opens the second housing 420 without supporting the second housing 420, the second housing 420 may slide without supporting the second housing 420 while using the electronic device 400.

In an embodiment, the first fastening member 460a and the first buffer member 470a of the rail unit 440 may be provided adjacent to the end portion 451a of the base 451 in the first direction, thereby effectively mitigating an impact generated in the first gear 431 and the second gear 441 and improving the durability of the electronic device 400.

In an embodiment, as shown in FIGS. 6A and 6B, the second fastening member 460b may be connected to the end portion 451b of the base 451 in the second direction. The second buffer member 470b may be provided between the second fastening member 460b and the end portion 441b of the second gear 441 in the second direction. The second buffer member 470b may mitigate an impact that is generated as the second gear 441 quickly or strongly slides in the second direction.

For example, when the electronic device 400 changes from the expanded state to the reduced state, in other words, when the second housing 420 slides in the second direction, the electronic device 400 may receive a relatively greater impact compared to the reverse case. In addition, when the second housing 420 moves in the second direction, the impact may be delivered to other electronic components accommodated in the first housing 410 and the second housing 420.

In an embodiment of the present disclosure, the second fastening member 460b and the second buffer member 470b of the rail unit 440 may be provided adjacent to the end portion 451b of the base 451 in the second direction, thereby effectively mitigating an impact generated in the first gear 431 and the second gear 441 and improving the durability of the electronic device 400.

FIG. 7A is a perspective view of the rail unit 440 according to an embodiment, FIG. 7B is an exploded perspective view of the rail unit 440 according to an embodiment, FIG. 7C is a side view of the rail unit 440 and the driving unit 430 according to an embodiment, and FIG. 7B is a cross-sectional view of the rail unit 440 according to an embodiment.

Specifically, FIG. 7A is a perspective view of the rail unit 440 in an assembled state, FIG. 7B is a perspective view of the rail unit 440 in a disassembled state, FIG. 7C is a diagram for illustrating interoperation between the rail unit 440 and the driving unit 430, and FIG. 7D is a cross-sectional view of the inside of the rail unit 440 in the A-A direction of FIG. 7C.

Referring to FIGS. 7A, 7B, 7C, and 7D, the base 451 of the rail unit 440 according to an embodiment may include at least some of a coupling surface 453, a first support area 455, a second support area 457, and a wing area 456.

Hereinafter, any repeated description may not be provided, and in the rail unit 440 and an electronic device (e.g., the electronic device 101 of FIG. 1, the electronic device 201 of FIGS. 2A to 2D, the electronic device 301 of FIG. 3, or the electronic device 400 of FIGS. 4A and 4B) including the same, it is apparent that a portion of components or structures may be replaced, added, or omitted within a scope that one of ordinary skill in the art may easily understand with reference to the following drawings and descriptions. In addition, at least one component or feature of the embodiments described above may be coupled to the rail unit 440 or the electronic device 400 including the same, unless technically and clearly infeasible.

In an embodiment, the coupling surface 453 may have a shape longitudinally extending in the first direction. The coupling surface 453 of the base 451 may be coupled to a second housing (e.g., the second housing 220 of FIGS. 2A to 2D, the second housing 320 of FIG. 3, or the second housing 420 of FIGS. 4A and 4B).

In an embodiment, the first support area 455 may support the second gear 441. The first support area 455 may be provided on the coupling surface 453. The first support area 455 may extend upward (e.g., the +Z direction) from the coupling surface 453 and may have a shape longitudinally extending in the first direction. The second gear 441 may include a rack gear extending along the first support area 455. The second gear 441 may slide in the first direction or the second direction while being supported by the first support area 455.

In an embodiment, the base 451 may further include the wing area 456. The wing area 456 may be connected to the first support area 455 or may extend to one side from the first support area 455. The wing area 456 may extend from the first support area 455 in a third direction (e.g., the +X direction) perpendicular to the first direction or a fourth direction (e.g., the -X direction) opposite to the third direction.

In an embodiment, the second gear 441 may include a coupling groove 443. The coupling groove 443 may accommodate the first support area 455 and the wing area 456. The inner circumferential surface of the coupling groove 443 may have a shape surrounding at least a partial area of the first support area 455 and the outer circumferential surface of the wing area 456. Through the coupling groove 443 and the wing area 456, the rail unit 440 may guide a slide direction of the second gear 441, and the second gear 441 may be supported by the base 451, wherein the second gear 441 may slide in the first direction or the second direction. For example, the second gear 441 may be at least partially in contact with the coupling surface 453 of the base 451, the first support area 455, and/or the wing area 456.

In an embodiment, the second support area 457 may support the buffer member 470. The second support area 457 may be provided in at least one of an end portion of the first support area 455 in the first direction and an end portion in the second direction. The second support area 457 may have a shape longitudinally extending from an end portion of the first support area 455.

For example, the second support area 457 may have a pillar or bar shape extending in the first direction from the end portion of the first support area 455 in the first direction. Alternatively, the second support area 457 may have a pillar or bar shape extending in the second direction from the end portion of the first support area 455 in the second direction. Alternatively, the second support area 457 may have a pillar or bar shape extending in both directions from the both end portions of the first support area 455.

In an embodiment, the buffer member 470 may be inserted into the second support area 457. For example, the buffer member 470 may include a spring structure that extends while surrounding the second support area 457. An end portion of the buffer member 470 having a spring shape may face the second gear 441, and the other end portion may face the fastening member 460.

The embodiments are not limited thereto, and the buffer member 470 according to an embodiment may be formed of an elastic body including an opening in which the second support area 457 is inserted. The elastic body may be formed of rubber or silicone or may be formed of polymer synthetic resin, such as polyurethane.

In an embodiment, the driving unit 430 may be connected to the rail unit 440 while the first gear 431 and the second gear 441 are engaged with each other. The gear frame 437 of the driving unit 430 may be coupled to a first housing (e.g., the first housing 210 of FIGS. 2A to 2D, the first housing 310 of FIG. 3, or the first housing 410 of FIGS. 4A and 4B). The base 451 of the rail unit 440 may be coupled to the second housing 420. As the first gear 431 rotates, the first housing 410 and/or the second housing 420 may move relative to each other, and the electronic device 400 may expand or contract.

For example, when the first gear 431 is rotated by a motor (e.g., the motor 433 of FIGS. 4A and 4B) or an external force, the first gear 431 and the second gear 441 may be engaged with each other and be pressed. When the first gear 431 is pressed, the driving unit 430 may relatively move together with the first housing 410 in the first direction or the second direction. Alternatively, when the second gear 441 is pressed, the rail unit 440 may relatively move together with the second housing 420 in the first direction or the second direction.

FIG. 8A is a perspective view of a partial area of the rail unit 440 according to an embodiment, and FIG. 8B is a plan view of a partial area of the rail unit 440 according to an embodiment.

Referring to FIGS. 8A and 8B, the second gear 441 according to an embodiment may include at least one of an extension area 445 and a protruding area 446, and the fastening member 460 may include a sub-buffer area 463.

Hereinafter, any repeated description may not be provided, and in the rail unit 440 and an electronic device (e.g., the electronic device 101 of FIG. 1, the electronic device 201 of FIGS. 2A to 2D, the electronic device 301 of FIG. 3, or the electronic device 400 of FIGS. 4A and 4B) including the same, it is apparent that a portion of components or structures may be replaced, added, or omitted within a scope that one of ordinary skill in the art may easily understand with reference to the following drawings and descriptions. In addition, at least one component or feature of the embodiments described above may be coupled to the rail unit 440 or the electronic device 400 including the same, unless technically and clearly infeasible.

In an embodiment, the extension area 445 may be an area extending toward the fastening member 460 from an end portion 441c (e.g., the end portion 441a of the second gear 441 of FIG. 4B or the end portion 441b of the second gear 441 of FIG. 6B) of the second gear 441 in contact with the buffer member 470.

In an embodiment, the extension area 445 may refer to an end portion of the second gear 441 in the first direction and/or the second direction. In at least a partial area, the extension area 445 may be disposed to face the buffer member 470.

In an embodiment, the sub-buffer area 463 may be provided on a surface facing the second gear 441, in the fastening member 460. The sub-buffer area 463 may absorb an impact delivered from the extension area 445, thereby mitigating an impact applied to the second gear 441. The sub-buffer area 463 may absorb and mitigate the impact applied to the second gear 441 by assisting the buffer member 470 or independently.

In an embodiment, the sub-buffer area 463 may be formed integrally with the fastening member 460. The sub-buffer area 463 may be a partial area of the fastening member 460. Alternatively, the embodiments are not limited thereto, and the sub-buffer area 463 may be formed as a separate member from the fastening member 460 and may be coupled or connected to the fastening member 460.

In an embodiment, when the sub-buffer area 463 collides with the extension area 445, the shape of the sub-buffer area 463 may be temporarily deformed, and the sub-buffer area 463 may mitigate an impact delivered to the extension area 445. For example, the sub-buffer area 463 may include an elastic structure having a spring structure, may be formed of rubber or silicone, or may be formed of polymer synthetic resin, such as polyurethane.

In an embodiment, the second gear 441 may include the protruding area 446 which is formed at an end of the extension area 445 and of which the cross-sectional area decreases while extending in the first direction or the second direction. The protruding area 446 may reduce a contact area between the extension area 445 and the sub-buffer area 463.

In an embodiment, the sub-buffer area 463 and the protruding area 446 may have shapes corresponding to each other. For example, as illustrated in FIGS. 8A and 8B, the sub-buffer area 463 may include a plurality of pillars surrounding the protruding area 446 and/or a groove or recess in which the protruding area 446 is accommodated. As the protruding area 446 presses the sub-buffer area 463, the extension area 445 may relatively easily change the shape of the sub-buffer area 463 and may provide a buffering effect.

FIG. 9A is a perspective view of a partial area of the rail unit 440 according to an embodiment, and FIG. 9B is a plan view of a partial area of the rail unit 440 according to an embodiment.

Referring to FIGS. 9A and 9B, the second gear 441 of the rail unit 440 according to an embodiment may include the extension area 445, and the rail unit 440 may further include a sub-buffer member 465.

Hereinafter, any repeated description may not be provided, and in the rail unit 440 and an electronic device (e.g., the electronic device 101 of FIG. 1, the electronic device 201 of FIGS. 2A to 2D, the electronic device 301 of FIG. 3, or the electronic device 400 of FIGS. 4A and 4B) including the same, it is apparent that a portion of components or structures may be replaced, added, or omitted within a scope that one of ordinary skill in the art may easily understand with reference to the following drawings and descriptions. In addition, at least one component or feature of the embodiments described above may be coupled to the rail unit 440 or the electronic device 400 including the same, unless technically and clearly infeasible.

In an embodiment, the sub-buffer member 465 may be provided between the extension area 445 and a surface facing the second gear 441 in the fastening member 460. For example, the sub-buffer member 465 may be coupled to the fastening member 460 or the extension area 445 of the second gear 441. Alternatively, the sub-buffer member 465 may be simultaneously coupled to the fastening member 460 and the second gear 441.

In an embodiment, the sub-buffer member 465 may mitigate an impact applied to the second gear 441 by absorbing an impact delivered from the extension area 445. The sub-buffer member 465 may absorb and mitigate the impact applied to the second gear 441 by assisting the buffer member 470 or independently.

In an embodiment, when the sub-buffer member 465 collides with the extending area 445, the shape of the sub-buffer area 463 may be temporarily deformed, and the sub-buffer member 465 may mitigate an impact delivered to the extending area 445. For example, the sub-buffer member 465 may include an elastic structure having a spring structure, may be formed of rubber or silicone, or may be formed of polymer synthetic resin, such as polyurethane.

FIG. 10 is a perspective view of a partial area of the rail unit 440 according to an embodiment.

Referring to FIG. 10, the buffer member 470 and the sub-buffer member 465 according to an embodiment may be integrally formed as one.

Hereinafter, any repeated description may not be provided, and in the rail unit 440 and an electronic device (e.g., the electronic device 101 of FIG. 1, the electronic device 201 of FIGS. 2A to 2D, the electronic device 301 of FIG. 3, or the electronic device 400 of FIGS. 4A and 4B) including the same, it is apparent that a portion of components or structures may be replaced, added, or omitted within a scope that one of ordinary skill in the art may easily understand with reference to the following drawings and descriptions. In addition, at least one component or feature of the embodiments described above may be coupled to the rail unit 440 or the electronic device 400 including the same, unless technically and clearly infeasible.

In an embodiment, the buffer member 470 and the sub-buffer member 465 may be formed as a single body. Alternatively, the sub-buffer member 465 may refer to a partial area extending or continuing from the buffer member 470 to one side.

In an embodiment, the buffer member 470 and the sub-buffer member 465 may be formed of rubber, silicone, or polymer synthetic resin, such as polyurethane.

In an embodiment, the buffer member 470 and the sub-buffer member 465 may be provided between the fastening member 460 and the second gear 441.

For example, the sub-buffer member 465 may be provided on the upper side (e.g., the +Z direction) of the buffer member 470. The sub-buffer member 465 may be disposed so that the sub-buffer member 465 and the extension area 445 face each other in the first direction or the second direction.

For example, the buffer member 470 may be provided on the lower side (e.g., the -Z direction) of the extension area 445. The buffer member 470 may have a shape extending toward the second gear 441 to contact an end portion of the second gear 441 compared to the sub-buffer member 465.

In an embodiment, the buffer member 470 and the sub-buffer member 465 may have a shape surrounding a plurality of surfaces of the second gear 441 and the fastening member 460 facing each other. The buffer member 470 and the sub-buffer member 465 may increase a contact area with the second gear 441 and the fastening member 460 and may efficiently mitigate an impact delivered to the second gear 441.

FIG. 11 is a cross-sectional view of a partial area of the rail unit 440 according to an embodiment.

Referring to FIG. 11, the rail unit 440 according to an embodiment may further include a sub-buffer structure 469.

Hereinafter, any repeated description may not be provided, and in the rail unit 440 and an electronic device (e.g., the electronic device 101 of FIG. 1, the electronic device 201 of FIGS. 2A to 2D, the electronic device 301 of FIG. 3, or the electronic device 400 of FIGS. 4A and 4B) including the same, it is apparent that a portion of components or structures may be replaced, added, or omitted within a scope that one of ordinary skill in the art may easily understand with reference to the following drawings and descriptions. In addition, at least one component or feature of the embodiments described above may be coupled to the rail unit 440 or the electronic device 400 including the same, unless technically and clearly infeasible.

In an embodiment, the fastening member 460 may be fixed to the second housing 420 via the fixing member 467. For example, the fixing member 467 may be a screw structure. The fixing member 467 may penetrate the fastening member 460 and may be fixed to the second housing 420, thereby fixing the fastening member 460 to the second housing 420.

In an embodiment, the sub-buffer structure 469 may mitigate an impact delivered to the fixing member 467 from the fastening member 460. The sub-buffer structure 469 may be disposed between the fastening member 460 and the fixing member 467. For example, the sub-buffer structure 469 may have a shape surrounding the inner circumferential surface of the opening 460c of the fixing member 467.

In an embodiment, the sub-buffer structure 469 may be formed of a different material from the fastening member 460. The fastening member 460 may be formed of a rigid material having relatively high durability, corrosion resistance, or rigidity, and the sub-buffer structure 469 may be formed of an elastic material having relatively high flexibility or elasticity. For example, the sub-buffer structure 469 may be formed of rubber or silicone, or may be formed of an elastic body formed of polymer synthetic resin, such as polyurethane.

In an embodiment, the sub-buffer structure 469 may mitigate an impact delivered to the second housing 420 via a first gear (e.g., the first gear 431 of FIGS. 4A to 5D) and the second gear 441 by the sliding motion of the electronic device 400. In addition, the sub-buffer structure 469 may provide fastening stability and reliability of the fastening member 460 and the fixing member 467 and may improve the durability of the electronic device 400.

FIG. 12A is a plan view of an electronic device 500 according to an embodiment, FIG. 12B is a cross-sectional view of the electronic device 500 according to an embodiment, and FIG. 12C is a cross-sectional view of the electronic device 500 according to an embodiment.

Specifically, FIG. 12B is a cross-sectional view of the inside of the electronic device in the B-B direction of FIG. 5A while the electronic device 500 is relatively expanded, and FIG. 12C is a cross-sectional view of the inside of the electronic device in the B-B direction of FIG. 12A while the electronic device 500 is relatively contracted.

Referring to FIGS. 12A, 12B, and 12C, the electronic device 500 (e.g., the electronic device 101 of FIG. 1, the electronic device 201 of FIGS. 2A to 2D, the electronic device 301 of FIG. 3, or the electronic device 400 of FIGS. 4A and 4B) according to an embodiment may include at least a portion of a first housing 510 (e.g., the first housing 210 of FIGS. 2A to 2B, the first housing 310 of FIG. 3, or the first housing 410 of FIGS. 4A and 4B), a second housing 520 (e.g., the second housing 220 of FIGS. 2A to 2D, the second housing 320 of FIG. 3, or the second housing 420 of FIGS. 4A and 4B), a driving unit 530 (e.g., the driving unit 430 of FIGS. 4A and 4B), and a rail unit 540 (e.g., the rail unit 440 of FIGS. 4A to 11).

Hereinafter, any repeated description may not be provided, and in the rail unit 540 and the electronic device 500 including the same, it is apparent that a portion of components or structures may be replaced, added, or omitted within a scope that one of ordinary skill in the art may easily understand with reference to the following drawings and descriptions. In addition, at least one component or feature of the embodiments described above may be coupled to the rail unit 540 or the electronic device 500 including the same, unless technically and clearly infeasible.

In an embodiment, the electronic device 500 may include a flexible or foldable display (e.g., the display module 160 of FIG. 1, the display panel 261 of FIGS. 2A to 2D, or the display panel 361 of FIG. 3). The electronic device 500 may be a slidable device in which a screen display area of the display is adjustable via expandable or contractible housings 510 or 520.

In an embodiment, the first housing 510 and the second housing 520 may move relative to each other in a first direction or a second direction that is opposite to the first direction. The electronic device 500 and/or the display may be expanded or contracted as at least one of the first housing 510 and the second housing 520 moves in a direction away from or approaching the other.

In an embodiment, the first direction may be a direction in which the first housing 510 and the second housing 520 are away from each other, and the second direction may be a direction in which the first housing 510 and the second housing 520 move close to each other.

For example, the second housing 520 may move relative to the first housing 510 in the first direction (or the "expansion direction") (e.g., the -Y direction) or the second direction (or the "contraction direction") (e.g., the +Y direction). Alternatively, the second housing 520 may move relative to the first housing 510 in the first or second direction.

Hereinafter, based on an embodiment of the electronic device 500 in which the driving unit 530 is disposed in the first housing 510 and the rail unit 540 is connected to the second housing 520, operations of the electronic device 500 are described on the assumption that the second housing 520 moves relative to the first housing 510 in the first or second direction. In addition, in the descriptions of the rail unit 540 and the electronic device 500 including the same according to the embodiments of the present disclosure, the "first direction" may refer to the -Y direction or the expansion direction, and the "second direction" may refer to the +Y direction or the contraction direction.

However, this is for ease of description, and the actual implementation of the electronic device 500 is not limited thereto. For example, the following descriptions may apply identically or similarly to an embodiment of the electronic device 500 in which the driving unit 530 is disposed in the second housing, the rail unit 540 is connected to the first housing 510, and the first housing 510 moves relative to the second housing 520.

In an embodiment, the driving unit 530 may provide power for relative movement of the first housing 510 or the second housing 520. The driving unit 530 may be disposed in the first housing 510. The driving unit 530 may include a first gear 531, a motor 533, and a shaft 535.

In an embodiment, the first gear 531 may be a pinion gear. The first gear 531 may have a gear structure that engages with a second gear 541. For example, the first gear 531 may have a shape in which gear teeth are arranged in a direction surrounding a rotation axis or the shaft 535.

In an embodiment, the first gear 531 may rotate around the rotation axis. As the first gear 531 rotates, the first gear 531 may engage with the second gear 541 and move in the first direction or the second direction. The first housing 510 connected to the first gear 531 may move relative to the second housing 520. Alternatively, the second housing 520 connected to the second gear 541 may move relative to the first housing 510.

In an embodiment, the motor 533 may rotate the first gear 531. The motor 533 may provide power to the driving unit 530. The motor 533 may be controlled by a processor (e.g., the processor 120 of FIG. 1) of the electronic device 500 or a processor or controller (e.g., the auxiliary processor 123 of FIG. 1) of the driving unit 530. The motor 533 may receive power from a battery (e.g., the battery 189 of FIG. 1).

In an embodiment, the shaft 535 may connect the motor 533 and the first gear 531 to each other. Alternatively, the shaft 535 may connect the first gear 531 and a gear frame 537, which supports the first gear 531, to each other. The shaft 535 may be horizontally aligned with the rotation axis of the motor 533. The motor 533 may rotate the first gear 531 fixed or connected to the shaft 535 by rotating the shaft 535.

In an embodiment, the gear frame 537 may be fixed to the first housing 510. The gear frame 537 may accommodate the first gear 531 therein. The gear frame 537 may protect the first gear 531 from moisture, dust, or a foreign material outside the gear frame 537.

In an embodiment, the rail unit 540 may form a rail on which the first gear 531 of the driving unit 530 rotates and/or moves. The rail unit 540 may include the second gear 541, a base 551, and a fastening member 560.

In an embodiment, the rail unit 540 may be connected to the second housing 520. For example, the rail unit 540 may be coupled to a surface (e.g., the surface in the +Y direction) of the second housing 520 facing the first housing 510.

In an embodiment, the second gear 541 may be a rack gear. The second gear 541 may have a gear structure that engages with the first gear 531. For example, the second gear 541 may have a structure extending in the first direction, and gear teeth of the second gear 541 may be arranged in the first direction.

In an embodiment, the base 551 may support other components of the rail unit 540. For example, the second gear 541 may be connected to the base 551 to slide, vibrate, or stay in the first direction or the second direction with a predetermined gap.

In an embodiment, an end portion of the base 551 may be coupled to a surface of the second housing 520 facing the first housing 510, and the other end portion opposite to the end portion of the base 551 may have a structure spaced upward (e.g., the +Z direction) from the first housing 510 and extending toward the first housing 510 from the second housing 520.

For example, the base 551 may be spaced apart from the first housing 510 and may extend horizontally with the first housing 510. In this case, a space for arranging an electronic component 503 of the electronic device may be provided between the first housing 510 and the base 551.

In an embodiment of the present disclosure, as the base 551 is spaced apart from the first housing 510, the electronic device 500 may secure a space between the first housing 510 and the base 551 to dispose the electronic component 503, the space efficiency of the electronic device 500 may be improved, and the internal layout design of the electronic device 500 may be assisted.

In an embodiment, in the second housing 520, the base 551 may be disposed at an end portion in the third direction (e.g., the +X direction) perpendicular to the first direction and at the center of an end portion in the fourth direction that is opposite to the third direction. Alternatively, the base 551 may be disposed adjacent to a central portion based on both side surfaces of the second housing 520. The base 551 may stably support the second gear 541 and may provide driving stability of the rail unit 540.

In an embodiment, the fastening member 560 may connect an end portion of the base 551 and the second housing 520 to each other. The fastening member 560 may be structurally connected to the second housing 520 or may be fixed to the second housing 520 by an adhesive member (e.g., adhesive or double-sided tape).

In an embodiment, the second gear 541 may be connected to the base 551 while the second gear 541 is in a state in which the second gear 541 may move in the first or second direction but may not move in other directions (e.g., the X-axis or Z-axis direction).

For example, when the buffer member 570 is formed of a spring structure that may expand or contract, or the second gear 541 moves by a predetermined interval, the second gear 541 may slide by the predetermined interval in the first direction or the second direction while the second gear 541 is connected to the base 551.

However, the term "slide" may encompass not only visually observable movement by a predetermined interval, but also movement or vibration of the second gear 541 in a visually unobservable range as a component (e.g., a buffer member 570) disposed on one side of the second gear 541 is compressed or deformed.

In an embodiment, the buffer member 570 may be provided between the second gear 541 and the fastening member 560. The buffer member 570 may be disposed to contact an end portion of the second gear 541. When the second gear 541 slides toward the buffer member 570 or an impact is delivered from the second gear 541 to the buffer member 570, the buffer member 570 may be compressed or deformed in response thereto.

In an embodiment, the buffer member 570 may absorb an impact applied to the second gear 541 or mitigate the impact applied to the second gear 541. The buffer member 570 may be disposed at a position facing the second gear 541 to restrict the movement of the second gear 541 or absorb an impact.

For example, as the buffer member 570 is deformed, the buffer member 570 may generate an elastic force to resist deformation, and the elastic force may restrict the slide motion of the second gear 541.

In an embodiment, the buffer member 570 may be formed of rubber, silicone, or an elastic structure having a spring structure or may be formed of polymer synthetic resin, such as polyurethane.

According to an embodiment, since the second gear 541 is slidably connected to the base 551 and/or the buffer member 570 mitigates an impact applied to the second gear 541, the electronic device 500 may improve the durability of the driving unit 530 and/or the rail unit 540.

For example, when the second housing 520 quickly or strongly slides, the first gear 531 may quickly or powerfully rotate while being interlocked with the second gear 541, and the shaft 535 connected to the first gear 531 may twist, or stress may be generated in the shaft 435. The shaft 535 may be at risk of being deformed or damaged as the shaft 535 is bent due to torsion or stress

In an embodiment of the present disclosure, since the second gear 541 is slidably connected to the base 551 in the first direction or the second direction, and/or the impact applied to the second gear 541 is mitigated by the buffer member 570, at least a portion of the impact applied to the first gear 531 and the shaft 535 may be absorbed by the buffer member 570 and the slide movement of the second gear 541.

FIG. 13A is a perspective view of a partial area of the rail unit 540 according to an embodiment, and FIG. 13B is a cross-sectional view of a partial area of the rail unit 540 according to an embodiment.

Specifically, FIG. 13A is a perspective view of an end portion on one side (e.g., the -Y direction or the first direction) of the rail unit 540, and FIG. 13B is a side cross-sectional view of the end portion on the one side of the rail unit 540 of FIG. 13A.

Referring to FIGS. 13A and 13B, the rail unit 540 according to an embodiment may include at least a portion of the base 551, the fastening member 560, and the buffer member 570.

Hereinafter, any repeated description may not be provided, and in the rail unit 540 and an electronic device (e.g., the electronic device 101 of FIG. 1, the electronic device 201 of FIGS. 2A to 2D, the electronic device 301 of FIG. 3, or the electronic device 400 of FIGS. 4A and 4B) including the same, it is apparent that a portion of components or structures may be replaced, added, or omitted within a scope that one of ordinary skill in the art may easily understand with reference to the following drawings and descriptions. In addition, at least one component or feature of the embodiments described above may be coupled to the rail unit 540 or the electronic device 500 including the same, unless technically and clearly infeasible.

In an embodiment, the fastening member 560 may connect to an end portion of the base 551 in the first direction and the second housing 520. The fastening member 560 may include a connecting portion or an opening to which the fixing member 567 is fastened. The fastening member 560 may be fixed to the second housing 520 via the fixing member 567.

For example, the fixing member 567 may be supported by the top surface of the fastening member 560 and may penetrate the fastening member 560. As the fixing member 567 is fixed to the second housing 520, the fastening member 560 may be fixed to the second housing 520 via the fixing member 567.

In an embodiment, the second housing 520 may include a protrusion 520a. The protrusion 520a may be inserted into the opening of the fastening member 560 to support fastening between the second housing 520 and the fastening member 560.

In an embodiment, the buffer member 570 may be provided between the fastening member 560 and the end portion of the second gear 541 in the first direction. The buffer member 570 may mitigate an impact that is generated as the second gear 541 quickly or strongly slides in the first direction.

For example, when the electronic device 500 falls or drops or a user opens the second housing 520 without supporting the second housing 520, the second housing 520 may slide without supporting the second housing 520 while using the electronic device 500.

In an embodiment, the fastening member 560 and the buffer member 570 of the rail unit 540 may be provided adjacent to the end portion of the base 551 in the first direction, thereby effectively mitigating an impact generated in the first gear (e.g., the first gear 531 of FIGS. 12A and 12B) and the second gear 541 and improving the durability of the electronic device 500.

FIG. 14A is a perspective view of a partial area of the rail unit 540 according to an embodiment, and FIG. 14B is a cross-sectional view of a partial area of the rail unit 540 according to an embodiment.

Specifically, FIG. 14A is a perspective view of an end portion on the other side (e.g., the +Y direction or the second direction) of the rail unit 540, and FIG. 14B is a side cross-sectional view of the end portion on the other side of the rail unit 540 of FIG. 14A.

Referring to FIGS. 14A and 14B, the rail unit 540 according to an embodiment may include at least a portion of a sub-fastening member 562 and a sub-buffer member 572.

Hereinafter, any repeated description may not be provided, and in the rail unit 540 and an electronic device (e.g., the electronic device 101 of FIG. 1, the electronic device 201 of FIGS. 2A to 2D, the electronic device 301 of FIG. 3, or the electronic device 400 of FIGS. 4A and 4B) including the same, it is apparent that a portion of components or structures may be replaced, added, or omitted within a scope that one of ordinary skill in the art may easily understand with reference to the following drawings and descriptions. In addition, at least one component or feature of the embodiments described above may be coupled to the rail unit 540 or the electronic device 500 including the same, unless technically and clearly infeasible.

In an embodiment, the sub-buffer member 572 and the sub-fastening member 562 may be connected to an end portion 541a of the second gear 541 in the second direction. The second gear 541 may further include an extension area 545 extending in the second direction from the end portion 541a in the second direction. Gear teeth may be provided on a surface (e.g., the surface in the -Z direction) of the extension area 545, and the other surface (e.g., the surface in the +Z direction) of the extension area 545 may support the sub-buffer member 572 and the sub-fastening member 562.

In an embodiment, the sub-fastening member 562 may be connected to the end portion of the base 551 in the second direction. For example, a coupling portion 551a may be provided at the end portion of the base 551 in the second direction, and the sub-fastening member 562 may include an accommodating groove 562a. As the coupling portion 551a is fastened to the accommodating groove 562a, the sub-fastening member 562 may be fixed to the base 551.

In an embodiment, the sub-buffer member 572 may be provided between the sub-fastening member 562 and the end portion 541a of the second gear 541 in the second direction. The sub-buffer member 572 may mitigate an impact that is generated as the second gear 541 quickly or strongly slides in the second direction.

For example, when the electronic device 500 changes from the expanded state to the reduced state, in other words, when the second housing 520 slides in the second direction, the electronic device 500 may receive a relatively greater impact compared to the reverse case. In addition, when the second housing 520 moves in the second direction, the impact may be delivered to other electronic components accommodated in the first housing 510 and the second housing 520.

In an embodiment, the sub-fastening member 562 and the sub-buffer member 572 of the rail unit 540 may be provided adjacent to the end portion of the base 551 in the second direction, thereby effectively mitigating an impact generated in the first gear (e.g., the first gear 531 of FIGS. 12A and 12B) and the second gear 541 and improving the durability of the electronic device 500.

FIG. 15A is a perspective view of the rail unit 540 according to an embodiment, FIG. 15B is an exploded perspective view of the rail unit 540 according to an embodiment, FIG. 15C is a cross-sectional view of the rail unit 540 according to an embodiment, and FIG. 15D is a cross-sectional view of the rail unit 540 according to an embodiment.

Specifically, FIG. 15A is a perspective view of the rail unit 540 in an assembled state, FIG. 15B is a perspective view of the rail unit 540 in a disassembled state, FIG. 15C is a side cross-sectional view of the rail unit 540 and the driving unit 530, and FIG. 15D is a cross-sectional view of the inside of the rail unit 540 in the C-C direction of FIG. 15C.

Referring to FIGS. 15A, 15B, 15C, and 15D, the rail unit 540 according to an embodiment may include at least a portion of a coupling groove 543, a bent surface 544, the extension area 545, the coupling portion 551a, and the accommodating groove 562a.

Hereinafter, any repeated description may not be provided, and in the rail unit 540 and an electronic device (e.g., the electronic device 101 of FIG. 1, the electronic device 201 of FIGS. 2A to 2D, the electronic device 301 of FIG. 3, the electronic device 400 of FIGS. 4A and 4B, or the electronic device 500 of FIGS. 12A, 12B, and 12C) including the same, it is apparent that a portion of components or structures may be replaced, added, or omitted within a scope that one of ordinary skill in the art may easily understand with reference to the following drawings and descriptions. In addition, at least one component or feature of the embodiments described above may be coupled to the rail unit 540 or the electronic device 500 including the same, unless technically and clearly infeasible.

In an embodiment, the coupling portion 551a may be formed at the end portion of the base 551 in the second direction. The sub-fastening member 562 may be fixed to the coupling portion 551a and may be connected to the end portion of the base 551 in the second direction. For example, the coupling portion 551a may have a three-dimensional structure extending in a direction (e.g., the X-Z plane direction or the X-axis direction) perpendicular to the second direction.

In an embodiment, the sub-fastening member 562 may include the accommodating groove 562a having a shape corresponding to the shape of the coupling portion 551a. The coupling portion 551a may be inserted and fixed to the accommodating groove 562a to fix the sub-fastening member 562 and the base 551 to each other.

In an embodiment, the second gear 541 may include the extension area 545. The extension area 545 may be an area extending in the second direction from the end portion 551a of the second gear 541 in contact with the sub-fastening member 562 and the sub-buffer member 572. Alternatively, the extension area 545 may refer to an end portion of the second gear 541 in the second direction. In at least a partial area, the extension area 545 may be disposed to face the sub-fastening member 562 and the sub-buffer member 572 and may support the sub-fastening member 562 and the sub-buffer member 572.

In an embodiment, the second gear 541 may include a rack gear surrounding at least a partial area of the outer circumferential surface of the base 551 and extending along the base 551. The second gear 541 may have a shape surrounding at least a partial area of the outer circumferential surface of the base 551 including the bent surface 544 and the coupling groove 543.

In an embodiment, the bent surface 544 may be a surface extending from the side surface (e.g., the surface in the X-axis direction) of the second gear 541 in a direction surrounding the base 551 or the coupling groove 543. For example, the bent surface 544 may refer to a surface of an upper part (e.g., the +Z direction) of the second gear 541. The bent surface 544 may extend while surrounding at least a partial area of the outer circumferential surface of the base 551 from the side surface of the second gear 541.

In an embodiment, the second gear 541 may include the coupling groove 543. The coupling groove 543 may accommodate the base 551. The inner circumferential surface of the coupling groove 543 may have a shape surrounding at least a partial area of the outer circumferential surface of the base 551.

In an embodiment, the coupling groove 543 and the bent surface 544 may couple the second gear 541 to the base 551 and may provide coupling stability between the second gear 541 and the base 551. In addition, through the coupling groove 543 and the bent surface 544, the second gear 541 may be supported by the base 551 in a state in which the second gear 541 may slide or vibrate in the first direction or the second direction.

The buffer member 570 and the sub-buffer member 572 according to an embodiment may be formed of an elastic body that is fixedly or movably disposed in the base 551. The elastic body may be formed of rubber or silicone or may be formed of polymer synthetic resin, such as polyurethane.

The disclosure is not limited thereto, and at least one of the buffer member 570 and the sub-buffer member 572 may be formed of a spring structure supported by the base 551. For example, an end portion of the buffer member 570 having a spring shape may face the second gear 541, and the other end may face the fastening member 560. Alternatively, an end portion of the sub-buffer member 572 having a spring shape may face the second gear 541, and the other end portion may face the sub-fastening member 562.

For example, although the drawing illustrates that the moving or sliding motion of the second gear 541 is restricted, this is only an example. In the actual implementation, the second gear 541 may be disposed apart from at least a portion of the fastening member 560, the sub-fastening member 562, the buffer member 570, and the sub-buffer member 572 by a predetermined interval so that the second gear 541 slides in the first direction and the second direction on the base 551.

In an embodiment, the driving unit 530 may be connected to the rail unit 540 while the first gear 531 and the second gear 541 are engaged with each other. The gear frame 537 of the driving unit 530 may be coupled to a first housing (e.g., the first housing 210 of FIGS. 2A to 2D, the first housing 310 of FIG. 3, the first housing 410 of FIGS. 4A and 4B, and the first housing 510 of FIGS. 12A, 12B, and 12C). The base 551 of the rail unit 540 may be connected to a second housing (e.g., the second housing 220 of FIGS. 2A to 2D, the second housing 320 of FIG. 3, the second housing 420 of FIGS. 4A and 4B, and the second housing 520 of FIGS. 12A, 12B, and 12C). As the first gear 531 rotates, the first housing 510 and/or the second housing 520 may move relative to each other, and the electronic device 500 may expand or contract.

For example, when the first gear 531 is rotated by a motor (e.g., the motor 533 of FIG. 12A) or an external force, the first gear 531 and the second gear 541 may be engaged with each other and be pressed. When the first gear 531 is pressed, the driving unit 530 may relatively move together with the first housing 510 in the first direction or the second direction. Alternatively, when the second gear 541 is pressed, the rail unit 540 may relatively move together with the second housing 520 in the first direction or the second direction.

The electronic device 400 according to an example embodiment of the present disclosure may include the first housing 410, the second housing 420 that may move relative to the first housing 410 in the first direction or the second direction that is opposite to the first direction, the driving unit 430 provided in the first housing 410 and including the first gear 431 and the motor 433 configured to rotate the first gear 431, and the rail unit 440 including the second gear 441 and configured to move the second housing 420 as the second gear 441 engages and moves by rotation of the first gear 431. In an embodiment, the rail unit 440 may include the base 451 which is coupled to the second housing 420 and to which the second gear 441 is slidably connected in the first direction or the second direction, the fastening member 460 configured to connect an end portion of the base 451 to the second housing 420, and the buffer member 470 provided between the second gear 441 and the fastening member 460 and configured to mitigate an impact applied to the second gear 441.

In an example embodiment, the second direction may be a direction in which the second housing 420 relatively approaches the first housing 410. In an embodiment, the fastening member 460 may be connected to the end portion 451b of the base 451 in the second direction.

In an example embodiment, the first direction may be a direction in which the second housing 420 is relatively away from the first housing 410. In an embodiment, the fastening member 460 may be connected to the end portion 451a of the base 451 in the first direction.

In an example embodiment, the rail unit 440 may include a plurality of fastening members 460. In an embodiment, the plurality of fastening members 460 may include the first fastening member 460a configured to connect the end portion 451a of the base 451 in the first direction to the second housing 420 and the second fastening member 460b configured to connect the end portion 451b of the base 451 in the second direction to the second housing 420.

In an example embodiment, the rail unit 440 may include a plurality of buffer members 470. In an embodiment, the plurality of buffer members 470 may include the first buffer member 470a provided between the second gear 441 and the first fastening member 460a, and the second buffer member 470b provided between the second gear 441 and the second fastening member 460b.

In an example embodiment, the base 451 may include the coupling surface 453 coupled to the second housing 420, the first support area 455 provided on the coupling surface 453, having a shape extending in the first direction, and supporting the second gear 441, and the second support area 457 provided at at least one of both end portions of the first support area 455 in the first direction and the second direction and supporting the buffer member 470.

In an example embodiment, the base 451 may include the wing area 456 extending from the first support area 455 in the third direction perpendicular to the first direction and in the fourth direction opposite to the third direction. In an embodiment, the second gear 441 may include the coupling groove 443 including a rack gear extending along the first support area 455 and accommodating the first support area 455 and the wing area 456.

In an example embodiment, the second support area 457 may include a shape longitudinally extending from an end portion of the first support area 455. In an embodiment, the buffer member 470 may be inserted into the second support area 457.

In an example embodiment, the buffer member 470 may include a spring structure that extends while surrounding the second support area 457.

In an example embodiment, the second gear 441 may include the extension area 445 extending toward the fastening member 460 from a surface in contact with the buffer member 470. In an embodiment, the fastening member 460 may further include a sub-buffer area 463 provided on a surface facing the second gear 441 and mitigating an impact delivered from the extension area 445.

In an example embodiment, the sub-buffer area 463 may be integrally formed with the fastening member 460 and may mitigate an impact delivered from the extension area 445 by temporarily deforming its shape when the sub-buffer area 463 collides with the extension area 445.

In an example embodiment, the second gear 441 may include the extension area 445 extending toward the fastening member 460 from a surface in contact with the buffer member 470. In an embodiment, the rail unit 440 may further include the sub-buffer member 465 provided between the extension area 445 and a surface facing the second gear 441 of the fastening member 460 and configured to mitigate an impact delivered from the extension area 445.

In an example embodiment, the sub-buffer area 465 may be formed as a single continuous body with the buffer member 470.

In an example embodiment, the rail unit 440 may further include the fixing member 467 penetrating the fastening member 460 and configured to fix the fastening member 460 to the second housing 420, and the sub-buffer structure 469 disposed between the fastening member 460 and the fixing member 467 and configured to mitigate an impact delivered from the fastening member 460 to the fixing member 467.

In an example embodiment, the rail unit 440 may be coupled to an end portion of the second housing 420 in the third direction perpendicular to the first direction.

The electronic device 500 according to an example embodiment of the present disclosure may include the first housing 510, the second housing 520 that may move relative to the first housing 510 in the first direction or the second direction that is opposite to the first direction, the driving unit 530 provided in the first housing 510 and including the first gear 531 and the motor 533 configured to rotate the first gear 531, and the rail unit 540 including the second gear 541 and configured to move the second housing 520 as the second gear 541 engages and moves by rotation of the first gear 531. In an embodiment, the rail unit 540 may include the base 551 to which the second gear 541 is connected and which has a shape in which an end portion is connected to a surface of the second housing 520 facing the first housing 510, and the other end portion extends toward the first housing 510, the fastening member 560 configured to connect the base 551 to the second housing 520, and the buffer member 570 provided between the second gear 541 and the fastening member 560 and configured to mitigate an impact applied to the second gear 541.

In an example embodiment, the rail unit 540 may further include the sub-fastening member 562 fixed to an end portion of the base 551 opposite to the fastening member 560, and the sub-buffer member 572 provided between the second gear 541 and the sub-fastening member 562 and configured to mitigate an impact applied to the second gear 541.

In an example embodiment, the second gear 541 may include a rack gear extending along the base 551 while surrounding at least a partial area of the outer circumferential surface of the base 551.

In an example embodiment, the base 551 may be spaced apart from the first housing 510 and extend horizontally with the first housing 510.

In an example embodiment, the base 551 may be disposed at an end portion of the second housing 520 in the third direction perpendicular to the first direction and at the center of an end portion in the fourth direction opposite to the third direction.

While embodiments have been illustrated and described above, the disclosure is not limited to the aforementioned specific embodiments. Those skilled in the art should appreciate that various modifications may be made to the embodiments without departing from the subject matter of the disclosure as defined by the appended claims, and also that such modifications are not to be understood individually from the technical spirit or prospect of the disclosure.

## Claims

1. An electronic device (400) comprising:
a first housing (410);
a second housing (420) movable relative to the first housing (410) in a first direction or a second direction opposite to the second direction;
a driving unit (430) provided in the first housing (410) and comprising a first gear (431) and a motor (433) configured to rotate the first gear (431); and
a rail unit (440) comprising a second gear (441) and configured to move the second housing (420) as the second gear (441) engages and moves by rotation of the first gear (431),
wherein the rail unit (440) comprises:
a base (451) which is coupled to the second housing (420) and to which the second gear (441) is slidably connected in the first direction or the second direction,
a fastening member (460) configured to connect an end portion of the base (451) to the second housing (420), and
a buffer member (470) provided between the second gear (441) and the fastening member (460) and configured to mitigate an impact applied to the second gear (441).

2. The electronic device (400) of claim 1,
wherein the second direction is a direction in which the second housing (420) relatively approaches the first housing (410), and
the fastening member (460) is connected to an end portion (451b) of the base (451) in the second direction.

3. The electronic device (400) of claim 1 or 2,
wherein the first direction is a direction in which the second housing (420) is configured to relatively move away from the first housing (410), and the fastening member (460) is connected to an end portion (451a) of the base (451) in the first direction.

4. The electronic device (400) of one of claims 1 to 3,
wherein the rail unit (440) comprises a plurality of fastening members (460), and
the plurality of fastening members (460) comprises:
a first fastening member (460a) configured to connect the end portion (451a) of the base (451) in the first direction to the second housing (420), and
a second fastening member (460b) configured to connect the end portion (451b) of the base (451) in the second direction to the second housing (420).

5. The electronic device (400) of one of claims 1 to 4,
wherein the rail unit (440) comprises a plurality of buffer members (470), and
the plurality of buffer members (470) comprises a first buffer member (470a) provided between the second gear (441) and the first fastening member (460a), and
a second fastening member (470b) provided between the second gear (441) and the second fastening member (460b).

6. The electronic device (400) of one of claims 1 to 5,
wherein the base (451) comprises:
a coupling surface (453) coupled to the second housing (420),
a first support area (455) provided on the coupling surface (453), having a shape extending in the first direction, and configured to support the second gear (441), and
a second support area (457) provided at at least one of both end portions of the first support area (455) in the first direction and the second direction and configured to support the buffer member (470).

7. The electronic device (400) of one of claims 1 to 6,
wherein the base (451) comprises a wing area (456) extending from the first support area (455) in a third direction perpendicular to the first direction and in a fourth direction opposite to the third direction, and
the second gear (441) comprises a coupling groove (443) comprising a rack gear extending along the first support area (455) and configured to accommodate the first support area (455) and the wing area (456).

8. The electronic device (400) of one of claims 1 to 7,
wherein the second support area (457) has a shape longitudinally extending from an end portion of the first support area (455), and
the buffer member ((470)) is inserted into the second support area (457).

9. The electronic device (400) of one of claims 1 to 8,
wherein the buffer member (470) comprises a spring configured to extend while surrounding the second support area (457).

10. The electronic device (400) of one of claims 1 to 9,
wherein the second gear (441) comprises an extension area (445) extending toward the fastening member (460) from a surface in contact with the buffer member (470), and
the fastening member (460) further comprises a sub-buffer area (463) provided on a surface facing the second gear (441) and configured to mitigate an impact delivered from the extension area (445).

11. The electronic device (400) of one of claims 1 to 10,
wherein the sub-buffer area (463) is integral with the fastening member 460, and when colliding with the extension area (445), mitigates an impact delivered from the extension area (445) by temporarily deforming its shape.

12. The electronic device (400) of one of claims 1 to 11,
wherein the second gear (441) comprises an extension area (445) extending toward the fastening member (460) from a surface in contact with the buffer member (470), and
the rail unit (440) further comprises a sub-buffer member (465) provided between the extension area (445) and a surface of the fastening member (460) facing the second gear (441) and configured to mitigate an impact delivered from the extension area (445).

13. The electronic device (400) of one of claims 1 to 12,
wherein the sub-buffer member (465) comprises a single continuous body with the buffer member (470).

14. The electronic device (400) of one of claims 1 to 13,
wherein the rail unit (440) further comprises:
a fixing member (467) penetrating the fastening member (460) and configured to fix the fastening member (460) to the second housing (420), and
a sub-buffer structure 469 disposed between the fastening member (460) and the fixing member (467) and configured to mitigate an impact delivered from the fastening member (460) to the fixing member (467).

15. The electronic device (400) of one of claims 1 to 14,
wherein the rail unit (440) is coupled to an end portion of the second housing (420) in the third direction perpendicular to the first direction.
